# EUROPEAN PATENT APPLICATION

(11) **EP 4 560 458 A1**
(43) Date of publication of application: **28.05.2025**
(21) Application number: 23884852.7
(22) Date of filing: 30.10.2023
(51) Int. Cl.: G06F 3/16

(54) **AUDIO CONTROL METHOD, STORAGE MEDIUM, PROGRAM PRODUCT, AND ELECTRONIC DEVICE**

(30) Priority: 01.11.2022 CN 202211358862
(71) Applicant: Huawei Technologies Co., Ltd., Shenzhen, Guangdong 518129 (CN)
(72) Inventor: ZHU, Chaochao, Shenzhen, Guangdong 518129 (CN)
(74) Representative: MERH-IP Matias Erny Reichl Hoffmann Patentanwälte PartG mbB
(86) International application number: PCT/CN2023/127789
(87) International publication number: WO 2024/093922

(57) **Abstract**

This application discloses an audio control method, a storage medium, a program product, and an electronic device, to separately manage, by separately managing focus information, audio applications that play audios via different electronic devices, thereby implementing distributed audio experience. The audio control method is applied to a first electronic device, a first audio application is installed on the first electronic device, the first electronic device includes a first focus stack, and the first focus stack is used to store focus information corresponding to an audio application that plays an audio via the first electronic device. The audio control method includes: creating a second focus stack, where the second focus stack is used to store focus information corresponding to an audio application that plays an audio via a second electronic device; responding to a first instruction, placing first focus information of the first audio application on the top of the second focus stack, and notifying that the first audio application obtains an audio focus, to play an audio of the first audio application via the second electronic device when content of the first audio application is hopped to the second electronic device.

## Description

This application claims priority to Chinese Patent Application No. 202211358862.2, filed with the China National Intellectual Property Administration on November 1, 2022 and entitled "AUDIO CONTROL METHOD, STORAGE MEDIUM, PROGRAM PRODUCT, AND ELECTRONIC DEVICE", which is incorporated herein by reference in its entirety.

### TECHNICAL FIELD

This application relates to the field of computer technologies, and in particular, to an audio control method, a storage medium, a program product, and an electronic device.

### BACKGROUND

An existing audio output processing manner is as follows: When a device A outputs an audio of an application 1, a user starts an application 2 on the device A to play an audio of the application 2. In this case, the device A turns off the audio of the application 1 or lowers audio volume to output the audio of the application 2.

In a device interconnection scenario, based on the existing audio output processing manner, when the device A hops the application 1 on the device A to the device B, and the audio of the application 1 is played via the device B, if the user starts the application 2 on the device A to play the audio of the application 2, the audio of the application 1 on the device B is affected, and the audio of the application 1 on the device B is turned off or the audio volume is lowered.

### SUMMARY

This application provides an audio control method, a storage medium, a program product, and an electronic device. Focus information is separately managed by using a first focus stack and a second focus stack, and audio applications that play audios via different electronic devices are separately managed by separately managing the focus information, so that an audio played via a second electronic device and an audio played via a first electronic device are independent of each other. In this way, distributed audio experience is implemented.

According to a first aspect, this application provides an audio control method, applied to a first electronic device. A first audio application is installed on the first electronic device, the first electronic device includes a first focus stack, and the first focus stack is used to store focus information corresponding to an audio application that plays an audio via the first electronic device. The audio control method includes: creating a second focus stack, where the second focus stack is used to store focus information corresponding to an audio application that plays an audio via a second electronic device; responding to a first instruction, placing first focus information of the first audio application on the top of the second focus stack, and notifying that the first audio application obtains an audio focus, to play an audio of the first audio application via the second electronic device when content of the first audio application is hopped to the second electronic device.

Compared with an existing audio output processing manner in which only one focus stack is maintained, at least two focus stacks are created and maintained in the audio control method in this application. For example, the first electronic device maintains the first focus stack and the second focus stack. Each of the first focus stack and the second focus stack is used to store focus information of an audio application that applies for an audio focus. A difference between the first focus stack and the second focus stack lies in that the audio of the audio application corresponding to the focus information stored in the first focus stack is played via the first electronic device, and the audio of the audio application corresponding to the focus information stored in the second focus stack is played via the second electronic device. Focus information is separately managed by using the first focus stack and the second focus stack, and audio applications that play audios via different electronic devices are separately managed by separately managing the focus information, so that the audio played via the second electronic device and the audio played via the first electronic device are independent of each other. In this way, distributed audio experience is implemented.

In a possible implementation, the audio control method further includes: obtaining first information, where the first information indicates to play an audio of a second audio application via the second electronic device; and in response to obtaining the first information, obtaining second focus information of the second audio application, placing the second focus information on the top of the second focus stack, and notifying that the first audio application loses the audio focus. Before the obtaining first information, the method further includes: obtaining the first information from the second electronic device through a distribute mobile sensing development platform service. According to this technical solution, after the first electronic device hops the first audio application to the second electronic device for playing, the second audio application may be normally played on the second electronic device.

In a possible implementation, the audio control method further includes: obtaining second information, where the second information indicates that the second audio application loses the audio focus; and in response to obtaining the second information, placing the first focus information on the top of the second focus stack, and notifying that the first audio application obtains the audio focus. Before the obtaining second information, the method further includes: obtaining the second information from the second electronic device through a distribute mobile sensing development platform service. According to this technical solution, the first electronic device can hop the first audio application to the second electronic device for playing. When playing of the first audio application is not completed, and the second audio application applies for playing, the second audio application may be normally played on the second electronic device. In addition, when the second audio application loses the audio focus (for example, after the application for playing is completed), the first audio application can still continue to be played on the second electronic device.

In a possible implementation, the responding to a first instruction, and placing first focus information of the first audio application on the top of the second focus stack includes: obtaining a first operation; in response to the first operation, determining, from the first focus stack and the second focus stack, the first focus stack corresponding to the first operation, and placing the first focus information of the first audio application on the top of the first focus stack, to play the audio of the first audio application via the first electronic device; obtaining a second operation, where the second operation indicates to hop, to the second electronic device, the first audio application that is playing the audio; and in response to the first instruction corresponding to the second operation, determining, from the first focus stack and the second focus stack, the second focus stack corresponding to the first instruction, and moving the first focus information of the first audio application from the first focus stack to the top of the second focus stack. According to this technical solution, the first electronic device may hop, to the second electronic device for playing, the first audio application that is playing the audio.

In a possible implementation, before the responding to a first instruction, the method further includes: hopping the first audio application to the second electronic device in response to a third operation; and obtaining the first instruction when detecting that the first audio application hopped to the second electronic device applies for audio playing. According to this technical solution, the first electronic device may hop, to the second electronic device for playing, the first audio application that plays no audio.

In a possible implementation, the audio control method further includes: obtaining a second instruction, where the second instruction instructs to migrate the first audio application back to the first electronic device; and in response to the second instruction, moving the first focus information from the second focus stack to the top of the first focus stack, and notifying that the first audio application obtains the audio focus. According to this technical solution, the first electronic device may migrate, back to the first electronic device, the first audio application migrated to the second electronic device, and the first audio application migrated back plays the audio on the first electronic device.

In a possible implementation, the creating a second focus stack includes: obtaining a device identifier of the second electronic device; and creating the second focus stack based on the device identifier. According to this technical solution, a corresponding focus stack (a focus stack other than the first focus stack) can be created for the second electronic device interconnected to the first electronic device.

In a possible implementation, when N device identifiers are obtained, and N is an integer greater than or equal to 2, the creating the second focus stack based on the device identifier includes: respectively creating N second focus stacks based on the N device identifiers. According to this technical solution, when there are two or more second electronic devices interconnected to the first electronic device, corresponding focus stacks (focus stacks other than the first focus stack) may be respectively created for the two or more second electronic devices.

According to a second aspect, this application provides an audio control method, applied to a first electronic device and a second electronic device. The first electronic device is communicatively connected to the second electronic device, a first audio application is installed on the first electronic device, the second electronic device includes a first local focus stack, and the first local focus stack is used to store focus information of an audio application that plays an audio via the second electronic device. The method includes: The first electronic device obtains a first instruction; in response to the first instruction, the first electronic device notifies that the first audio application obtains an audio focus, and transmits first focus information of the first audio application to the second electronic device; and the second electronic device creates first analog focus information based on the first focus information, and places the first analog focus information on the top of the first local focus stack, to play an audio of the first audio application via the second electronic device when content of the first audio application is hopped to the second electronic device.

Compared with an existing audio output processing manner in which focus information of an audio application on an electronic device is stored in a focus stack maintained by the electronic device, in this application, the focus information of the audio application is stored in the local focus stack of the electronic device that plays the audio application. When it is expected that an audio of a first audio application on an electronic device B is played via an electronic device A, focus information of the first audio application that applies for an audio focus is stored in a first local focus stack of the electronic device B, and the first local focus stack maintains the focus information corresponding to the hopped first audio application. Correspondingly, when it is expected that an audio of a second audio application on the electronic device B is played via the electronic device A, focus information of the second audio application that applies for an audio focus is stored in a second local focus stack of the electronic device A, and the second local focus stack maintains the focus information corresponding to the hopped second audio application. In this way, audio applications that play audios via different electronic devices may be separately managed by separately managing focus information, so that an audio played via the second electronic device and an audio played via the first electronic device are independent of each other. In this way, distributed audio experience is implemented.

In a possible implementation, the second electronic device includes a second audio application, and the audio control method further includes: The second electronic device obtains a fourth operation, where the fourth operation indicates to play an audio of the second audio application via the second electronic device; in response to the fourth operation, the second electronic device places second focus information of the second audio application on the top of the first local focus stack, and notifies that the second audio application obtains the audio focus; and in response to the second audio application obtaining the audio focus, the first electronic device notifies that the first audio application loses the audio focus. According to this technical solution, after the first electronic device hops the first audio application to the second electronic device for playing, the second audio application may be normally played on the second electronic device.

In a possible implementation, the first electronic device includes a second local focus stack, and the audio control method further includes: The first electronic device obtains first analog focus information from the second electronic device in response to a migrate-back instruction; and the first electronic device places the first analog focus information on the top of the second local focus stack, and notifies that the first audio application obtains the audio focus, to play the audio of the first audio application via the first electronic device. According to this technical solution, the first electronic device may migrate, back to the first electronic device, the first audio application migrated to the second electronic device, and the first audio application migrated back plays the audio on the first electronic device.

According to a third aspect, this application provides a computer storage medium, including computer instructions. When the computer instructions are run on an electronic device, the electronic device is enabled to perform the audio control method in any one of the foregoing implementations.

According to a fourth aspect, this application provides a computer program product. When the computer program product is run on a computer, the computer is enabled to perform the audio control method in any one of the foregoing implementations.

According to a fifth aspect, this application provides an electronic device. The electronic device includes a processor and a memory. The memory is configured to store instructions, and the processor is configured to call the instructions in the memory, for the electronic device to perform the audio control method in any one of the foregoing implementations.

Technical effects achieved in the second aspect, the third aspect, the fourth aspect, and the fifth aspect are similar to those achieved by corresponding technical means in the first aspect. Details are not described again herein.

The technical solutions provided in this application bring at least the following beneficial effects.

Audio applications that play audios via different electronic devices may be separately managed by separately managing focus information, so that an audio played via the second electronic device and an audio played via the first electronic device are independent of each other. In this way, distributed audio experience is implemented.

### BRIEF DESCRIPTION OF DRAWINGS

FIG. 1 is a diagram of a structure of an audio system according to an embodiment of this application;
FIG. 2 is a block diagram of a software structure of an electronic device according to an embodiment of this application;
FIG. 3 is a schematic flowchart of an audio control method according to Embodiment 1 of this application;
FIG. 4A to FIG. 4G are diagrams of an application scenario corresponding to Embodiment 1;
FIG. 5 is a schematic flowchart of operations of a first electronic device corresponding to FIG. 4A to FIG. 4G;
FIG. 6 is a schematic flowchart of an audio control method according to Embodiment 2 of this application;
FIG. 7A to FIG. 7D-1 and FIG. 7D-2 are diagrams of an application scenario corresponding to Embodiment 2;
FIG. 8 is a schematic flowchart of operations of a first electronic device corresponding to FIG. 7A to FIG. 7D-1 and FIG. 7D-2;
FIG. 9 is a schematic flowchart of an audio control method according to Embodiment 3 of this application;
FIG. 10A to FIG. 10C are diagrams of an application scenario corresponding to Embodiment 3;
FIG. 11 is a schematic flowchart of operations of a first electronic device corresponding to FIG. 10A to FIG. 10C;
FIG. 12 is a schematic flowchart of an audio control method according to Embodiment 4 of this application;
FIG. 13A and FIG. 13B-1 and FIG. 13B-2 are diagrams of an application scenario corresponding to Embodiment 4;
FIG. 14 is a schematic flowchart of operations of a first electronic device corresponding to FIG. 13A and FIG. 13B-1 and FIG. 13B-2;
FIG. 15 is a schematic flowchart of an audio control method according to Embodiment 5 of this application;
FIG. 16 is a schematic flowchart of an audio control method according to Embodiment 6 of this application;
FIG. 17 is a schematic flowchart of an audio control method according to Embodiment 7 of this application;
FIG. 18 is a schematic flowchart of an audio control method according to Embodiment 8 of this application;
FIG. 19 is a schematic flowchart of an audio control method according to Embodiment 9 of this application;
FIG. 20 is a schematic flowchart of an audio control method according to Embodiment 10 of this application;
FIG. 21 is a schematic flowchart of an audio control method according to Embodiment 11 of this application; and
FIG. 22 is a diagram of a hardware structure of an electronic device according to an embodiment of this application.

### DESCRIPTION OF EMBODIMENTS

"A plurality of" in this application means two or more. In addition, it should be understood that in descriptions of this application, terms such as "first" and "second" are merely used for distinguishing and description, but shall not be understood as indicating or implying relative importance, or shall not be understood as indicating or implying a sequence.

"A plurality of" in this application means two or more. In embodiments of this application, the word "example" or "for example" indicates giving an example, an illustration, or a description. Any embodiment or design scheme described as an "example" or "for example" in embodiments of this application shall not be explained as being more preferred or having more advantages than another embodiment or design scheme. Exactly, use of the term "example", "for example", or the like is intended to present a related concept in a specific manner.

In a device interconnection scenario, a user intends to implement distributed audio experience. For example, a device A transmits an audio of an application 1 to a device B, and playing an audio of an application 2 on the device A and playing the audio of the application 1 on the device B may not affect each other. Distributed audio experience cannot be implemented based on an existing audio output processing manner. When implementing this application, the inventor finds that the existing audio output processing manner is to manage an audio output according to an audio focus (Audio Focus) preemption mechanism. For example, an audio focus preemption mechanism is set in a design of an Android open source project (Android Open Source Project, AOSP). To play an audio, each audio application needs to apply for an audio focus, and the audio application that obtains the audio focus has permission to play the audio. However, focus information of all audio applications that apply for audio focuses and that are on a same device is placed in a same audio focus stack. As a result, distributed audio experience cannot be implemented.

Specifically, when the audio application 1 on the device A successfully applies for an audio focus, focus information 1 of the audio application 1 that applies for the audio focus is added to the top of an audio focus stack, and the audio application 1 is notified that the audio application 1 obtains the audio focus. In this case, the audio application 1 has permission to play an audio. The device A hops the audio application 1 to the device B, and the audio of the audio application 1 is played via the device B. In this case, the user starts the audio application 2 on the device A to play the audio, and the audio application 2 applies for an audio focus. When the audio application 2 successfully applies for the audio focus, focus information 2 of the audio application 2 that applies for the audio focus is added to the top of an audio focus stack, and the focus information of the audio application 1 is no longer on the top of the stack. Then, the audio application 2 is notified that the audio application 2 obtains the audio focus, and an audio application (for example, the audio application 1) corresponding to other focus information in the audio focus stack is notified that the audio application loses the audio focus. The audio application 1 stops or pauses playing or lowers audio volume due to a loss of the audio focus.

In view of this, this application provides an audio control method, which is applicable to a device interconnection scenario, to implement distributed audio experience. A basic principle of this application is as follows: In a scenario in which a plurality of electronic devices are interconnected, for a plurality of audio applications on a same electronic device, when the plurality of audio applications play audios via different electronic devices, audio playing of the plurality of audio applications is separately managed. For example, a first audio application 1 and a first audio application 2 are installed on a first electronic device. When an audio of the first audio application 1 is played via the first electronic device, and an audio of the second audio application 2 is played via a second electronic device, audio playing of the first audio application 1 and audio playing of the first audio application 2 are separately managed. For example, focus information A of the first audio application 1 that applies for an audio focus and focus information B of the first audio application 2 that applies for an audio focus are separately managed, so that the focus information A and the focus information B are not stored in a same management bucket (for example, an audio focus stack) for maintaining an audio playing order. Further, audio playing of the first audio application 1 and audio playing of the first audio application 2 are separately managed by separately managing the focus information A and the focus information B.

For example, the first electronic device includes a first focus stack and a second focus stack, and each of the first focus stack and the second focus stack is used to store focus information of an audio application that applies for an audio focus. A difference between the first focus stack and the second focus stack lies in that an audio of an audio application corresponding to focus information stored in the first focus stack is played via the first electronic device, and an audio of an audio application corresponding to focus information stored in the second focus stack is played via the second electronic device. In other words, when it is expected that the audio of the audio application is played via the first electronic device, the focus information of the audio application that applies for an audio focus is stored in the first focus stack; or when it is expected that the audio of the audio application is played via the second electronic device, the focus information of the audio application that applies for an audio focus is stored in the second focus stack.

For another example, when it is expected that an audio of a first audio application on an electronic device B is played via an electronic device A, focus information of the first audio application that applies for an audio focus is stored in a first local focus stack of the electronic device B, and the first local focus stack maintains the focus information corresponding to the hopped first audio application. Correspondingly, when it is expected that an audio of a second audio application on the electronic device B is played via the electronic device A, focus information of the second audio application that applies for an audio focus is stored in a second local focus stack of the electronic device A, and the second local focus stack maintains the focus information corresponding to the hopped second audio application.

In this way, audio applications that play audios via different electronic devices may be separately managed by separately managing focus information, so that an audio played via the second electronic device and an audio played via the first electronic device are independent of each other. In this way, distributed audio experience is implemented.

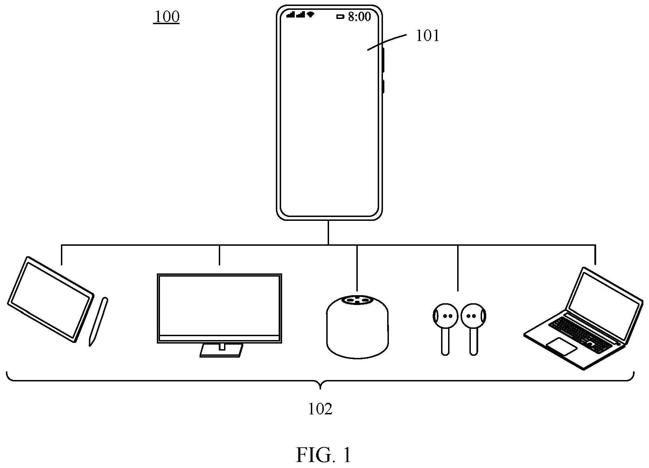

FIG. 1 shows an example of an audio system 100 according to an embodiment of this application.

As shown in FIG. 1, the audio system 100 includes a first electronic device 101 and a second electronic device 102. A communication connection is established between the first electronic device 101 and the second electronic device 102. The first electronic device 101 and the second electronic device 102 may implement transmission of information between the first electronic device 101 and the second electronic device 102 through the established communication connection. The information transmitted between the first electronic device 101 and the second electronic device 102 includes but is not limited to content of an application, an application-related parameter (for example, focus information of an audio application that applies for an audio focus), video data, audio data, a control instruction, and the like.

The first electronic device 101 and the second electronic device 102 may communicate with each other in a wired or wireless manner. For example, a wired connection may be established between the first electronic device 101 and the second electronic device 102 through a universal serial bus (Universal Serial Bus, USB). For another example, a wireless connection may be established between the first electronic device 101 and the second electronic device 102 by using a global system for mobile communications (global system for mobile communications, GSM), a generalpacket radio service (general packet radio service, GPRS), code division multiple access (code division multiple access, CDMA), wideband code division multiple access (wideband code division multiple access, WCDMA), long term evolution (Long Term Evolution, LTE), Bluetooth, wireless fidelity (wireless fidelity, Wi-Fi), near field communication (Near Field Communication, NFC), a voice over Internet protocol (voice over Internet protocol, VoIP), and a communication protocol that supports a network slicing architecture. This is not specifically limited in this application.

In embodiments of this application, the first electronic device 101 is a device for outputting content of an audio application, and the second electronic device 102 is a device that receives the transmitted content of the audio application. For example, the first electronic device 101 hops, to the second electronic device 102, the content of the audio application installed on the first electronic device 101.

In embodiments of this application, the content of the audio application may be hopped between a plurality of electronic devices by using an application hopping technology. The application hopping technology is to transmit content (such as an image, a text, or an audio) of an application currently running on one or more electronic devices to one or more other electronic devices, so that the one or more other electronic devices run the content of the application. For example, an audio of a first audio application running on the first electronic device 101 is transmitted to the second electronic device 102, so that the second electronic device 102 can play the audio of the first audio application. In addition, the application hopping technology may include an application projection technology, an application handoff (handoff) technology, an application distribution technology, and the like. The application projection technology is to project content of an application running on an electronic device onto a display or a display medium of another electronic device for display. The application handoff technology is a technology of storing, transferring, or sharing content of an application running on an electronic device in/to/with another electronic device. The application distribution technology is a technology in which a back end (for example, processing is performed for a service logic display function on a user interface UI interface) of an application is run on an electronic device, a front end (for example, a user interface UI interface) of the application runs on another electronic device, and the back end of the application needs to be accessed in real time.

For an electronic device in the audio system 100, the electronic device may hop content of an audio application installed on the electronic device, and may also receive content of an audio application hopped from another electronic device in the audio system 100. When the electronic device hops the content of the audio application installed on the electronic device, the electronic device is the first electronic device 101. When the electronic device receives the content of the audio application hopped from the another electronic device, the electronic device is the second electronic device 102.

For example, the first electronic device 101 may be specifically an electronic device having an audio input/output function, for example, a mobile phone, a speaker, a tablet, a television (which may also be referred to as a smart television, a smart screen, or a large-screen device), a laptop computer, an ultra-mobile personal computer (Ultra-mobile Personal Computer, UMPC), a handheld computer, a netbook, a personal digital assistant (Personal Digital Assistant, PDA), a wearable electronic device, a vehicle-mounted device, or a virtual reality device. This is not limited in embodiments of this application.

For example, in addition to a conventional audio output device like a Bluetooth headset or a wired headset, the second electronic device 102 may be an electronic device having an audio input/output function, for example, a mobile phone, a tablet, a laptop computer, a television, a speaker, or a vehicle-mounted device. This is not limited in embodiments of this application.

It should be noted that a quantity and types of first electronic devices 101 and a quantity and types of second electronic devices 102 in the audio system 100 shown in FIG. 1 are merely examples. This is not specifically limited in this application. A quantity of second electronic devices in the audio system 100 in this application is N, where N is an integer greater than or equal to 1.

A software system of the first electronic device 101 or the second electronic device 102 may use a layered architecture, an event-driven architecture, a microkernel architecture, a microservice architecture, or a cloud architecture. In the following embodiments of this application, a software structure of the electronic device (the first electronic device 101 or the second electronic device 102) is described by using an Android (Android) system with a layered architecture as an example. Certainly, in another operating system, embodiments of this application may also be implemented provided that functions implemented by function modules are similar to those in embodiments of this application.

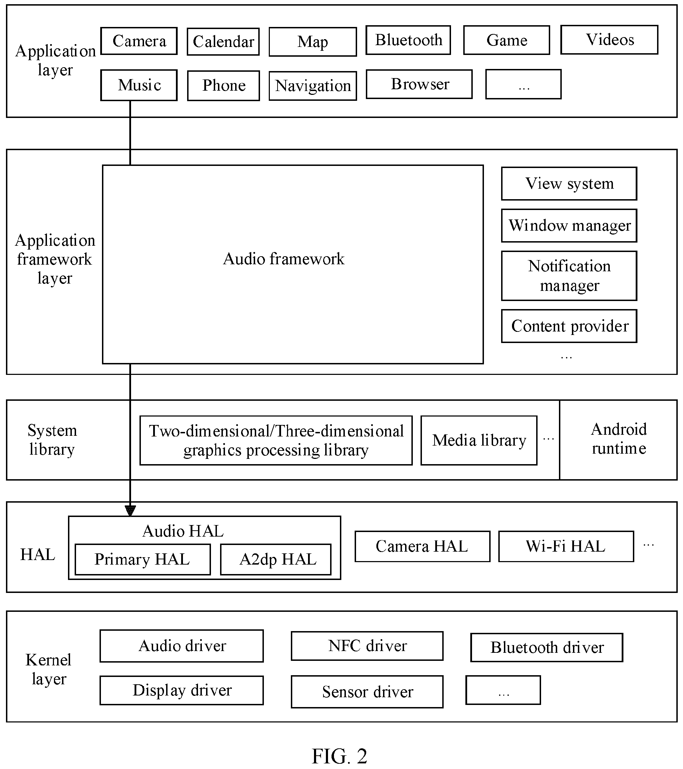

FIG. 2 shows a software structure of an electronic device according to an embodiment of this application.

In the layered architecture, software is divided into several layers, and each layer has a clear role and task. The layers communicate with each other through a software interface. In some embodiments, the Android system is divided into fifth layers: an application layer, an application framework layer, an Android runtime (Android runtime) and system library, a hardware abstraction layer (hardware abstraction layer, HAL), and a kernel layer from top to bottom. The application layer may include a series of application packages.

As shown in FIG. 2, applications (application, APP) such as Phone, Navigation, Browser, Camera, Calendar, Map, Bluetooth, Game, Music, and Videos may be installed at the application layer.

Applications installed at the application layer include an audio application. The audio application is an application that has an audio function and that can provide audio content for a user. The audio application may be an audio application installed on a device before delivery, for example, Huawei Music, or may be an audio application released by a third party.

For example, the audio application may be a music APP, a camera APP, a video APP, a map APP, a recording APP, or the like. The music APP can play music. The camera APP can output a shutter sound preset by a system during photographing. When playing a video, the video APP can output an audio corresponding to a video image. The map APP may output a navigation voice after enabling a navigation function. The recording APP may play a pre-recorded audio. A specific type of the audio application is not specifically limited in this application.

In this embodiment of this application, before starting to play an audio, the audio application needs to send, to an audio framework, a request for applying for an audio focus. When the audio application successfully applies for the audio focus, the audio application obtains the audio focus. In this case, the audio application obtains permission to play the audio. Alternatively, when the audio application fails to apply for the audio focus, the audio application does not obtain permission to play the audio.

In some embodiments, the audio application calls a function requestAudioFocus() to apply to the audio framework for the audio focus, for example, applies to an audio manager (not shown in the figure) in the audio framework for the audio focus. When applying to the audio framework for the audio focus, the audio application needs to provide the audio framework with related information for applying for the audio focus (namely, focus information). After receiving the request for applying for the audio focus from the audio application, the audio framework constructs a corresponding focus request object, and stores all focus information in the focus request object.

In this specification, the focus information of the audio application or the focus information corresponding to the audio application is focus information in a case in which the audio application applies for the audio focus.

In this embodiment of this application, the focus information includes an identifier of the audio application, and the identifier of the audio application may include package name information of the application, audio manager information held by the application, and listening object information of the application. The package name information is obtained from the audio application, and the audio manager information held by the audio application and the listening object information of the application are distinguished by using memory addresses.

In this embodiment of this application, the focus information further includes an audio focus application type. The audio focus application type has the following five options.
(1) AUDIOFOCUS_GAIN: The parameter indicates that a permanent audio focus is expected to be applied for and a previous audio application that holds the audio focus is expected to stop playing. For example, the audio application applies for AUDIOFOCUS_GAIN when needing to play music.
(2) AUDIOFOCUS_GAIN_TRANSIENT: The parameter indicates that a transient audio focus is expected to be applied for and is to be released immediately. In this case, a previous audio application that holds the audio focus is expected to pause playing. For example, the audio application applies for AUDIOFOCUS_GAIN_TRANSIENT when needing to play a reminder sound.
(3) AUDIOFOCUS_GAIN_TRANSIENT_MAY_DUCK: The parameter indicates that a transient audio focus is applied for and is to be released immediately, and a previous audio application that holds the focus is expected to lower playing volume (but can still play an audio). In this case, the audio is played in mixed mode. For example, the map APP applies for AUDIOFOCUS_GAIN_TRANSIENT_MAY_DUCK when needing to output a navigation broadcast.
(4) AUDIOFOCUS_GAIN_TRANSIENT_EXCLUSIVE: The parameter indicates that a transient audio focus is applied for, and a system is expected not to play any sudden sound (for example, a notification or a reminder). For example, the recording APP applies for AUDIOFOCUS_GAIN_TRANSIENT_EXCLUSIVE when needing to record a voice.

In some embodiments, the focus information further includes an audio source type, where an audio source includes at least one of music, a video, a call, and a voice. In a subsequent processing process, an operating system can distinguish, by using the focus information, whether the audio sources are from a same audio application.

In some embodiments, the focus information includes a user code of an audio playing process, and also includes a user code of the audio application.

When the audio focus is successfully applied for, the audio framework returns an AUDIOFOCUS_REQUEST_GRANTED constant to the audio application. When the audio application receives the AUDIOFOCUS_REQUEST_GRANTED constant, it indicates that the audio application obtains the audio focus. When the audio focus fails to be applied for, the audio framework returns an AUDIOFOCUS_REQUEST_FAILED constant to the audio application. When the audio application receives the AUDIOFOCUS_REQUEST_FAILED constant, it indicates that the audio application fails to obtain the audio focus.

When the audio application successfully applies for the audio focus, the focus request object corresponding to the audio application is added to the top of an audio focus stack, indicating that the audio application obtains the audio focus, and a callback function OnAudioFocusChangeListener is registered with the audio framework. In this way, the audio application can receive a change of a status of the audio focus from the audio framework in time. OnAudioFocusChangeListener is an audio focus listener. The audio focus listener can be used to know whether the audio application obtains or loses the focus.

The audio focus listener listens to a status of the audio focus. The audio focus listener calls an onAudioFocusChange (int focus Change) function based on a change of a current audio focus, where focus Change has the following four parameters.
1. AUDIOFOCUS_GAIN indicates that the audio focus is obtained. In this case, the audio application may call an audio output device to play an audio.
2. AUDIOFOCUS_LOSS indicates that the audio focus has been lost for long time. End audio playing work and finish concluding work.
3. AUDIOFOCUS_LOSS_TRANSIENT indicates that the audio focus is transiently lost but is to be returned soon. In this case, the audio application terminates audio playing, but retains a playing resource because the audio focus may be returned soon.
4. AUDIOFOCUS_LOSS_TRANSIENT_CAN_DUCK indicates that the audio focus is transiently lost, but the audio focus can be used together with a new user.

After completing playing, the audio application can call an abandonAudioFocus () function to release the audio focus.

In this embodiment of this application, the audio framework may perform the audio control method provided in embodiments of this application, to manage a process of the focus applied for by the audio application.

In addition to creating and maintaining the first focus stack, the audio framework in this embodiment of this application further creates and maintains one or more focus stacks, for example, a second focus stack.

As shown in FIG. 2, an example in which the first audio application installed on the first electronic device is a music APP is used. An audio architecture for implementing the foregoing audio function for the music APP is provided in the first electronic device. When the music APP applies for audio playing on the first electronic device, the music APP applies to the audio framework for an audio focus. When the music APP successfully applies for the audio focus, focus information in a case in which the music APP applies for the audio focus is placed on the top of the first focus stack, and the music APP is notified that the music APP obtains the audio focus. In this case, the music APP plays the audio, and plays the audio via the first electronic device.

When the music APP applies for audio playing on the second electronic device, the music APP applies to the audio framework for an audio focus. When the music APP successfully applies for the audio focus, focus information in a case in which the music APP applies for the audio focus is placed on the top of the second focus stack, and the music APP is notified that the music APP obtains the audio focus. In this case, the music APP plays the audio. When the second electronic device obtains audio content of the music APP transmitted from the first electronic device, the second electronic device plays the audio of the music APP.

As shown in FIG. 2, the hardware abstraction layer (hardware abstraction layer, HAL) may be further included between the application framework layer and the kernel layer of the Android system. The HAL is responsible for interacting with each hardware device of an electronic device. The HAL hides implementation details of each hardware device, and may provide the Android system with an interface for calling each hardware device. The HAL provides HALs corresponding to different hardware devices in a mobile phone, for example, an Audio HAL, a Camera HAL, and a Wi-Fi HAL.

The Audio HAL may also be used as a part of the audio architecture. The audio architecture may directly call the Audio HAL to send processed audio data to the Audio HAL. The Audio HAL sends the audio data to a corresponding audio output device (for example, a speaker or a headset) for playing.

The Audio HAL may be further divided into a Primary HAL, an A2dp HAL, and the like. For example, Audio Flinger may call the Primary HAL to output audio data to a speaker (speaker) of the electronic device, or Audio Flinger may call the A2dp HAL to output audio data to a Bluetooth headset connected to the electronic device.

In addition, the application framework layer may further include a window manager, a content provider, a view system, a notification manager, and the like. This is not limited in embodiments of this application.

As shown in FIG. 2, the Android runtime (Android runtime) includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications. The media library supports playback and recording in a plurality of commonly used audio and video formats, and static image files.

The media library may support a plurality of audio and video coding formats, for example, MPEG-4, H.264, MP3, AAC, AMR, JPG, PNG, and the like. The three-dimensional graphics processing library is configured to implement three-dimensional graphics drawing, image rendering, composition, layer processing, and the like. The 2D graphics engine is a drawing engine for 2D drawing.

The kernel layer is located below the HAL and is a layer between hardware and software. The kernel layer includes at least a display driver, a near field communication (Near Field Communication, NFC) driver, an audio driver, a sensor driver, a Bluetooth driver, and the like. This is not limited in embodiments of this application.

The following describes an audio control method according to an embodiment of this application. The audio control method may be applied to the audio system 100 shown in FIG. 1, and is performed by the first electronic device 101 shown in FIG. 1. A first audio application is installed on the first electronic device 101.

### Embodiment 1

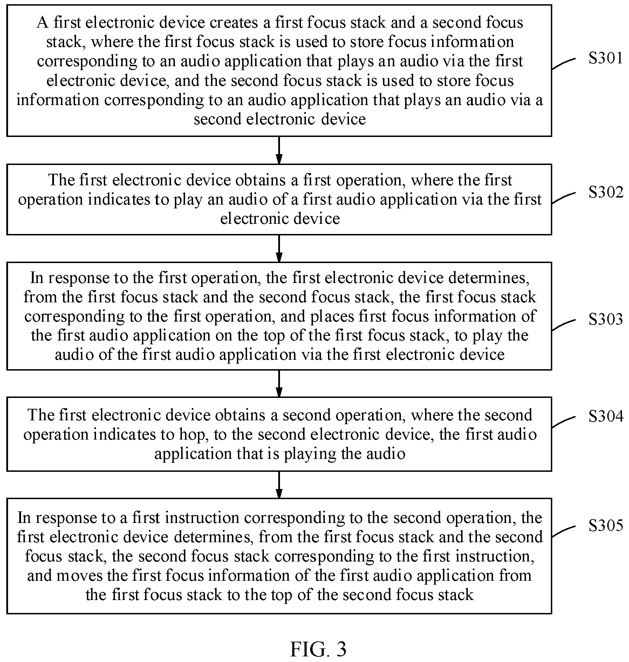

FIG. 3 shows an example of an audio control method according to an embodiment of this application.

Step S301: A first electronic device creates a first focus stack and a second focus stack, where the first focus stack is used to store focus information corresponding to an audio application that plays an audio via the first electronic device, and the second focus stack is used to store focus information corresponding to an audio application that plays an audio via a second electronic device.

In an existing audio output management manner, the first electronic device maintains only one audio focus stack, and focus information corresponding to an audio application that applies for an audio focus on the first electronic device is stored in the unique audio focus stack. If the focus information is located on the top of the audio focus stack, the audio application corresponding to the focus information obtains the audio focus, and the audio application that obtains the audio focus has permission to play an audio. However, there is only one top location of the stack. As a result, at least the following problem exists: A plurality of audio applications (for example, an audio application that applies for audio playing on the first electronic device, and an audio application that is hopped to the second electronic device and that plays the audio) on the first electronic device cannot all obtain audio focuses. The audio application whose focus information is on the top of the stack has the permission to play the audio, but an audio corresponding to an audio application that loses the audio focus is affected.

Therefore, the first electronic device in this application creates and maintains at least two focus stacks. The at least two focus stacks each are used to store focus information of an audio application that applies for an audio focus when the audio application needs to play an audio. A difference lies in that the focus information corresponding to the audio application that plays the audio via the first electronic device is stored in the first focus stack, and the focus information corresponding to the audio application that plays the audio via the second electronic device is stored in the second focus stack. In other words, when the first electronic device and the second electronic device are interconnected to implement distributed audio experience, for the first audio application installed on the first electronic device, when an audio of the first audio application needs to be played via the first electronic device, focus information of the first audio application is stored in the first focus stack; or when an audio of the first audio application needs to be played via the second electronic device, focus information of the first audio application is stored in the second focus stack.

In some embodiments, when the first electronic device hops the audio application to the second electronic device for playing, and a second audio application installed on the second electronic device needs to play an audio via the second electronic device, focus information of the second audio application is stored in the second focus stack. In this case, the focus information of the first audio application installed on the first electronic device is stored in the first focus stack. The focus information of the first audio application installed on the first electronic device and the focus information of the second audio application installed on the second electronic device may be stored in the second focus stack.

The focus stack (for example, the first focus stack or the second focus stack) in this embodiment of this application may be implemented as a stack, or may be implemented as an array, a queue, a map, or the like. This is not specifically limited in this application. The second focus stack and the first focus stack may ensure, based on a preset maintenance order, that an audio application corresponding to only one piece of focus information obtains an audio focus at a time. For example, when the focus information is on the top of the focus stack, an audio application corresponding to the focus information obtains an audio focus.

In this embodiment of this application, a plurality of first audio applications may be installed on the first electronic device, and different first audio applications correspond to different focus information. For example, first focus information B1 corresponding to a first audio application A1 is different from first focus information B2 corresponding to a first audio application A2, and at least application identifiers are different.

It should be noted that the first electronic device may create the second focus stack when finding the second electronic device. Alternatively, the first electronic device may create the second focus stack in response to hopping, by the user to the second electronic device, the first audio application that plays no audio or is playing an audio. In this case, step S301 and step S305 may be performed simultaneously. In some embodiments, the first electronic device may pre-create the second focus stack before delivery. In this case, when the first electronic device and the second electronic device are interconnected, the first electronic device may directly store, in the created second focus stack in response to hopping the first audio application to the second electronic device for playing, the focus information in a case in which the first audio application applies for the audio focus. An occasion on which the first electronic device creates the second focus stack is not specifically limited in this application.

When the first electronic device creates only one second focus stack, the second focus stack may not be associated with the second electronic device. If the first electronic device further creates two or more focus stacks in addition to the first focus stack, for example, in the following embodiment, the first electronic device creates a second focus stack and a third focus stack, the second focus stack and the third focus stack are associated with the corresponding second electronic device.

In this embodiment of this application, the first electronic device maintains the second focus stack and the first focus stack, and an audio output device on the first electronic device plays only the audio of the audio application that obtains the audio focus in the first focus stack.

Step S302: The first electronic device obtains a first operation, where the first operation indicates to play the audio of the first audio application via the first electronic device.

For example, the first operation may be a tap operation, a touch operation, a touch and hold operation, a voice operation, or the like. For example, the first operation may be tapping a play control on the first audio application.

Step S303: The first electronic device determines, from the first focus stack and the second focus stack in response to the first operation, the first focus stack corresponding to the first operation, and places first focus information of the first audio application on the top of the first focus stack, to play the audio of the first audio application via the first electronic device.

In this embodiment of this application, the first focus information of the first audio application is placed on the top of the first focus stack. In this case, the first audio application obtains the audio focus and has permission to play an audio. The first audio application plays the audio, and plays the audio via the audio output device on the first electronic device.

The first electronic device may determine, based on the first operation indicating to play the audio via the first electronic device, that a focus stack corresponding to the first operation is the first focus stack. When the first electronic device has not created the second focus stack in response to the first operation, step S303 is that the first electronic device places the first focus information of the first audio application on the top of the first focus stack in response to the first operation, to play the audio of the first audio application via the first electronic device.

Step S304: The first electronic device obtains a second operation, where the second operation indicates to hop, to the second electronic device, the first audio application that is playing the audio.

The second operation indicates to hop, to the second electronic device, the first audio application that is playing the audio on the first electronic device, that is, to hop the first audio application to the second electronic device, keep playing the audio of the first audio application, and play the audio via the second electronic device.

For example, the second operation may be a tap operation, a touch operation, a touch and hold operation, a voice operation, or the like. For example, the second operation may be that the user enables a hop function on an interface of the first audio application that is playing the audio.

Step S305: In response to a first instruction corresponding to the second operation, the first electronic device determines, from the first focus stack and the second focus stack, the second focus stack corresponding to the first instruction, and moves the first focus information of the first audio application from the first focus stack to the top of the second focus stack.

The first instruction instructs to play the audio of the first audio application hopped to the second electronic device.

In this embodiment of this application, the first electronic device moves the first focus information from the first focus stack to the top of the second focus stack, and the first audio application corresponding to the first focus information in the focus stack obtains the audio focus, and notifies that the first audio application obtains the audio focus. The first audio application has permission to play an audio, and may play the audio. When the second electronic device receives content (including at least audio data, interface data, and the like) of the first audio application, the second electronic device plays the audio of the first audio application.

An electronic device indicated, based on the first instruction, to play the audio is the second electronic device. In this case, the first electronic device may determine that a focus stack corresponding to the first instruction is the second focus stack. When the first electronic device obtains the second operation, the first electronic device has not created the second focus stack. In this case, step S305 may be that the first electronic device creates the second focus stack in response to the first instruction corresponding to the second operation, and moves the first focus information of the first audio application from the first focus stack to the top of the second focus stack.

For example, the first electronic device is a mobile phone, and the first audio application is a music application.

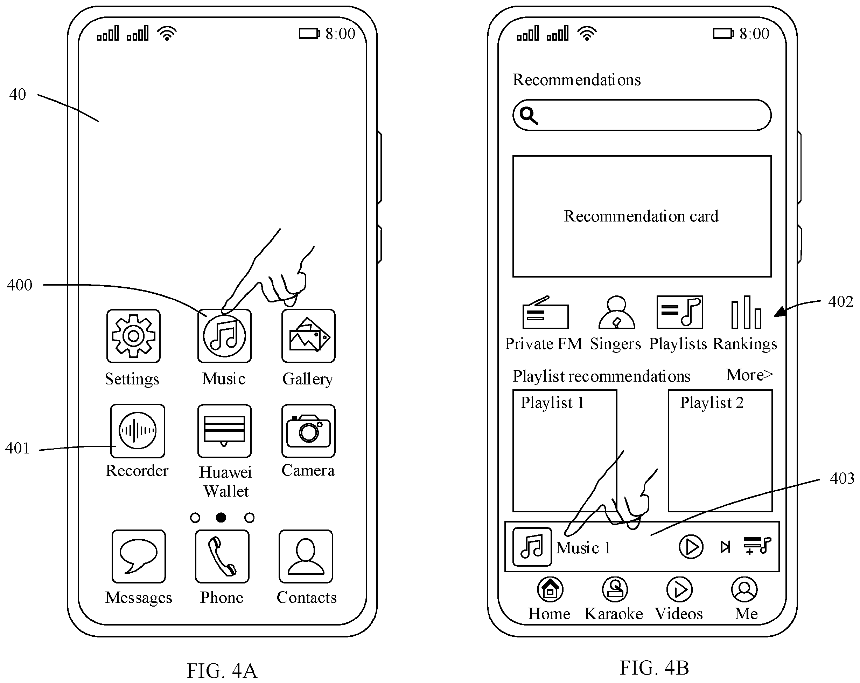

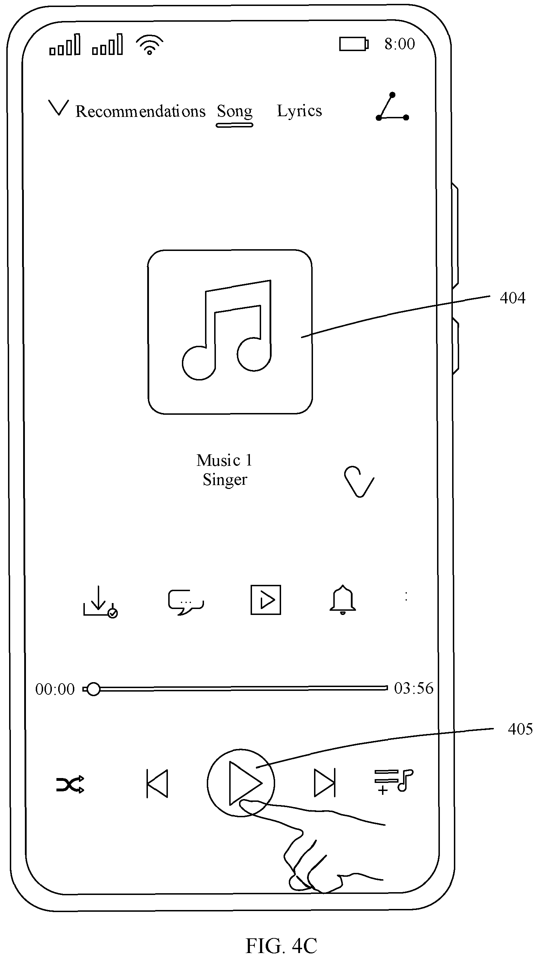

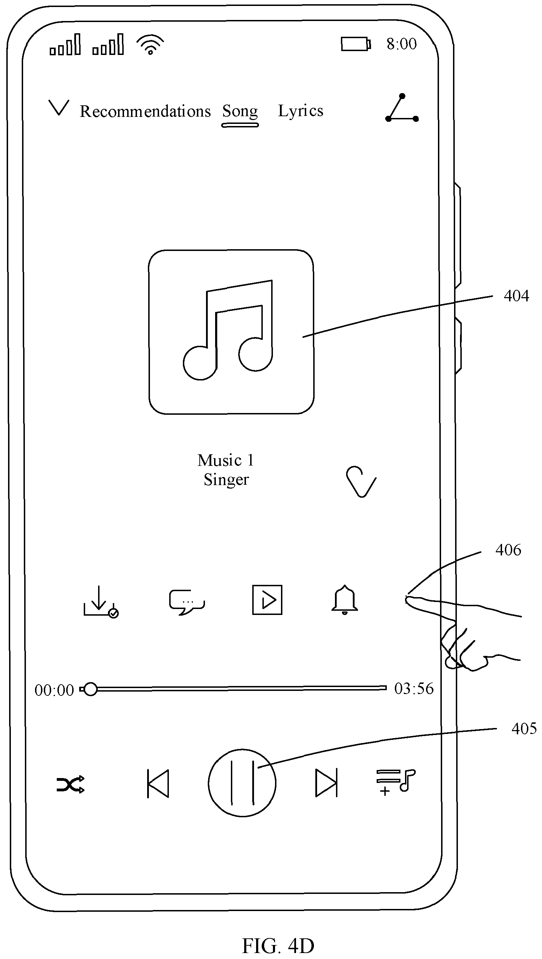

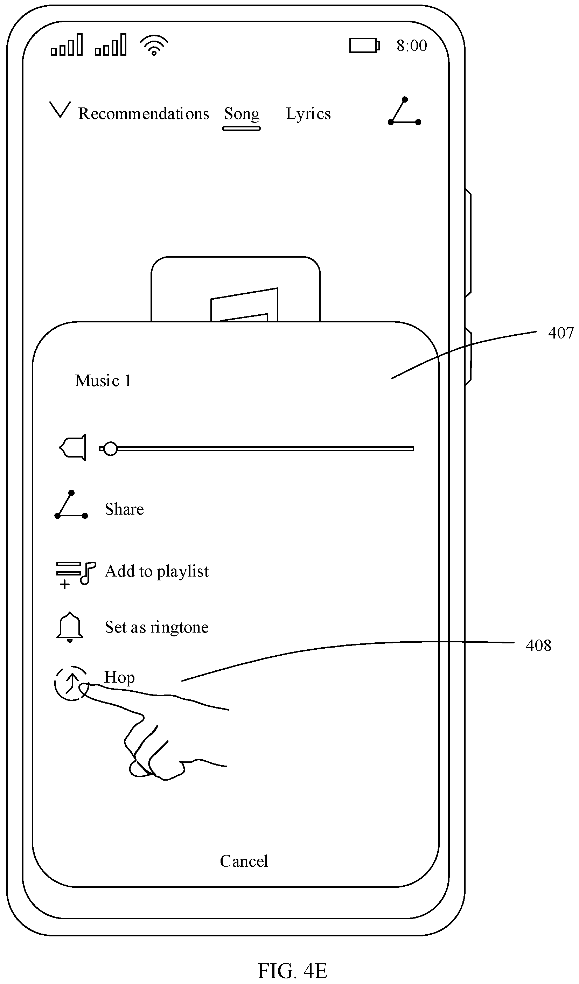

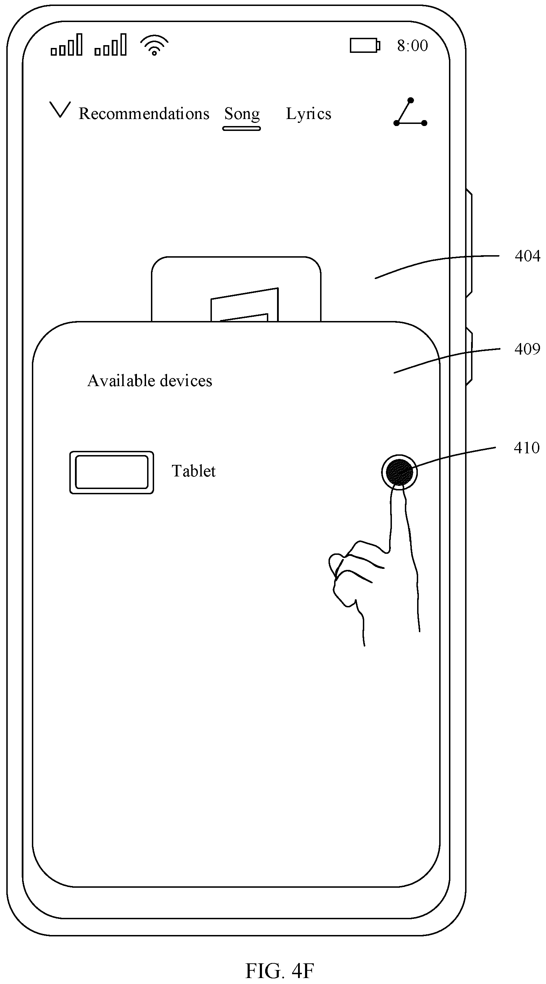

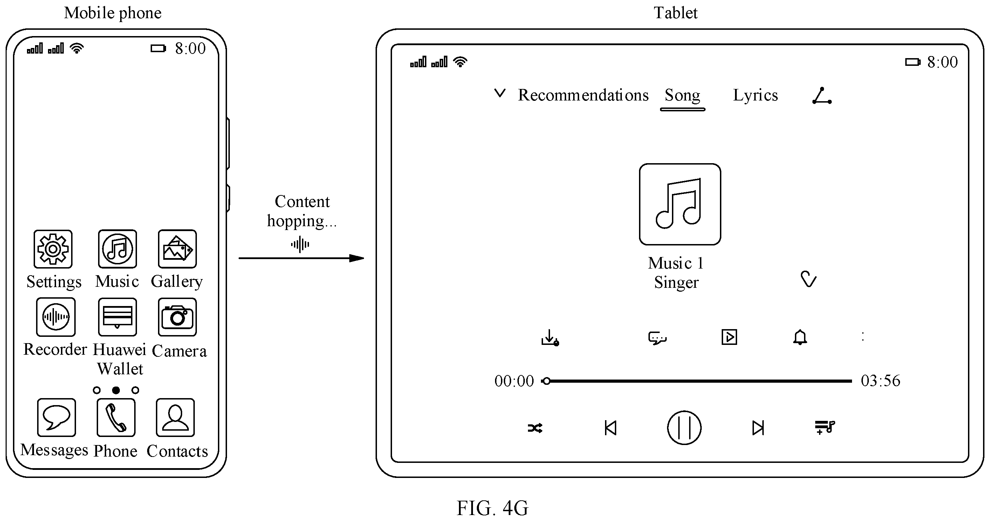

As shown in FIG. 4A, the mobile phone displays a home screen 40, and the home screen 40 includes a music application 400 and a recording application 401. A user taps the music application 400. In response to tapping the music application 400 by the user, the mobile phone displays an interface 402 of the music application 400 shown in FIG. 4B. The interface 402 includes a control 403 of music 1. The user taps the control 403 of the music 1. In response to tapping the control 403 of the music 1 by the user, the mobile phone displays an interface 404 of the music 1 shown in FIG. 4C. The interface 404 of the music 1 includes a play control 405, where the play control 405 is in a non-playing state. The user taps the play control 405 (namely, the first operation). In response to tapping the play control 405 by the user, the mobile phone displays an interface 404 shown in FIG. 4D. The play control 405 on the interface 404 shown in FIG. 4D is changed to be in a playing state, and the mobile phone plays an audio of the music 1. After the user plays the audio of the music 1, as shown in FIG. 4D, the user taps a More control 406 on the interface 404. In response to tapping the More control 406 by the user, the mobile phone displays a display list 407 and a hop option 408 that are shown in FIG. 4E. The user taps the hop option 408, where the hop option 408 corresponds to a hop function. In response to tapping the hop option 408 by the user, the mobile phone enables the hop function, and may hop content of the music application 400 to the second electronic device by using an application hopping technology. Before hopping the content of the music application 400, the mobile phone searches for a device that can currently receive the content of the music application 400, that is, searches for a device that can establish an interconnection to the mobile phone. Currently, the mobile phone finds that the device that can receive hopping of the audio application includes a tablet. In response to tapping the hop option 408 by the user, the mobile phone displays an available device list 409 and a tablet option 410 that are shown in FIG. 4F. The user taps the tablet option 410 (namely, the second operation), that is, the user instructs to hop the content of the music application 401 to the tablet. In response to tapping the tablet option 410 by the user, as shown in FIG. 4G, the mobile phone hops the content of the music application 400 (for example, the audio of the music 1 and the interface of the music 1) to the tablet, and the mobile phone displays the home screen. The interface displayed on the tablet is similar to the interface 404 of the music application 400, and the tablet plays the audio of the music 1. The mobile phone does not display the interface 404 of the music application 400, the mobile phone may display the home screen 400, and the mobile phone does not play the audio of the music 1.

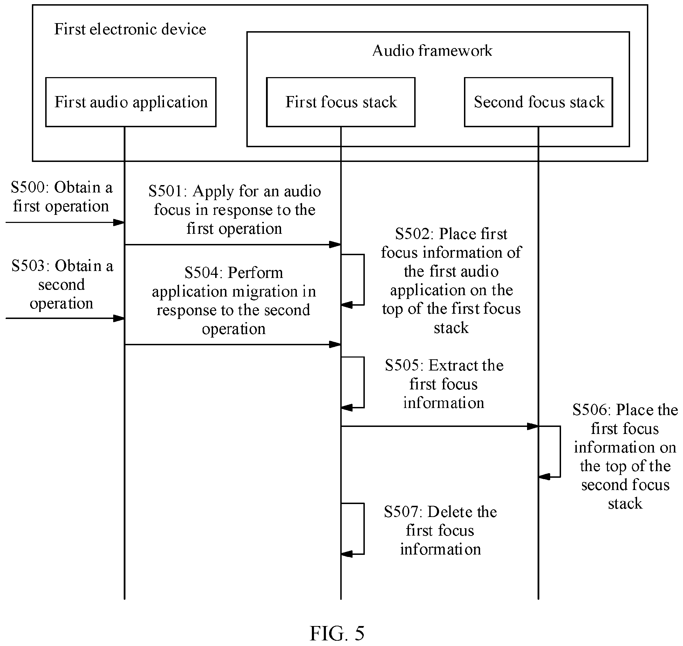

Refer to FIG. 4C, FIG. 4D, FIG. 4F, FIG. 4G, and FIG. 5. An example of an operation process of the first electronic device is described.

Step S500: The first audio application obtains the first operation.

As shown in FIG. 4C, the first operation is that the user taps the play control 405.

Step S501: The first audio application applies to an audio framework of the first electronic device for an audio focus in response to the first operation.

Step S502: The audio framework places the first focus information of the first audio application on the top of the first focus stack.

When the first audio application successfully applies for the audio focus, the audio framework places the first focus information of the first audio application on the top of the first focus stack, and notifies that the first audio application obtains the audio focus. The first audio application obtains permission to play an audio. As shown in FIG. 4D, the music application 400 obtains permission to play an audio, and an audio output device on the mobile phone plays the audio of the music 1.

Step S503: The first audio application obtains the second operation.

As shown in FIG. 4F, the second operation is that the user taps the tablet option 410.

Step S504: The first audio application performs application migration in response to the second operation.

As shown in FIG. 4F, the mobile phone enables the hop function in response to tapping the tablet option 410 by the user. The first audio application performs application migration. The mobile phone migrates the music application 400 to the tablet, and notifies the audio framework of information about migrating the music application 400 to the tablet.

Step S505: The audio framework extracts the first focus information of the first audio application.

In response to the information about migrating the music application 400 to the tablet, the audio framework extracts, from the first focus stack, first focus information corresponding to the music application 400.

Step S506: The audio framework places the first focus information on the top of the second focus stack.

After extracting the first focus information of the first audio application from the first focus stack based on the information about migrating the music application 400 to the tablet, the audio framework places the first focus information on the top of the second focus stack.

In some embodiments, after extracting the first focus information from the first focus stack, the audio framework may create corresponding first focus information based on the extracted first focus information, and place the created first focus information on the top of the second focus stack. For example, after extracting the first focus information from the first focus stack, the audio framework creates a new focus request object based on the extracted first focus information, where the new focus request object stores content of the extracted first focus information, and the audio framework places the new focus request object on the top of the second focus stack.

As shown in FIG. 4G, the music application 400 obtains the permission to play the audio, and the tablet receives the audio of music 1 transmitted by the mobile phone, and may play the audio of the music 1 via an audio output device on the tablet.

Step S507: The audio framework deletes the first focus information from the first focus stack.

When adding the first focus information to the second focus stack, the audio framework deletes the first focus information from the first focus stack, in other words, the first focus information is popped.

In this embodiment of this application, the first audio application is installed on the first electronic device, the first electronic device may hop, to the second electronic device, the first audio application that is playing the audio, and the second electronic device plays the audio of the first audio application. Based on a case in which the first focus information corresponding to the first audio application that plays the audio via the second electronic device is stored in the second focus stack, the first focus stack and the second focus stack are independent of each other, and the audio played by the first electronic device and the audio played by the second electronic device do not affect each other.

### Embodiment 2

On the basis of Embodiment 1, in Embodiment 2, the user continues to start another first audio application on the first electronic device and plays an audio.

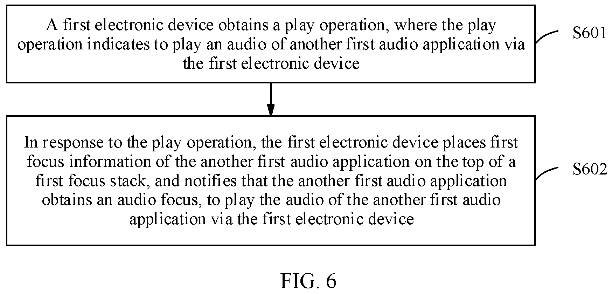

FIG. 6 shows an example of another audio control method according to an embodiment of this application.

Step S601: A first electronic device obtains a play operation, where the play operation indicates to play an audio of the another first audio application via the first electronic device.

The play operation in step S601 may be a tap operation, a touch operation, a touch and hold operation, a voice operation, or the like. For example, the play operation may be tapping a play control of the another first audio application.

In this embodiment of this application, a difference between the first operation and the play operation lies in that the first operation indicates to play the audio of the first audio application on the first electronic device, and the play operation indicates to play the audio of the another first audio application on the first electronic device.

Step S602: The first electronic device places first focus information of the another first audio application on the top of the first focus stack in response to the play operation, and notifies that the another first audio application obtains an audio focus, to play the audio of the another first audio application on the first electronic device.

In this embodiment of this application, the first focus information of the another first audio application is placed on the top of the first focus stack. In this case, the another audio application obtains the audio focus and has permission to play an audio. The another first audio application plays the audio, and plays the audio via an audio output device on the first electronic device.

The first electronic device may determine, based on the play operation indicating to play the audio via the first electronic device, that a focus stack corresponding to the play operation is the first focus stack.

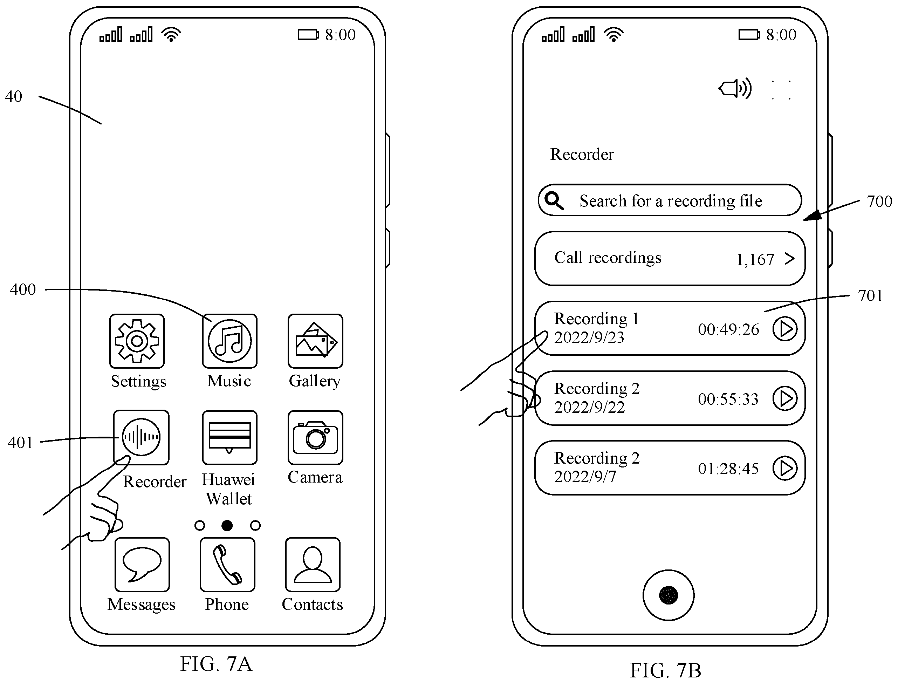

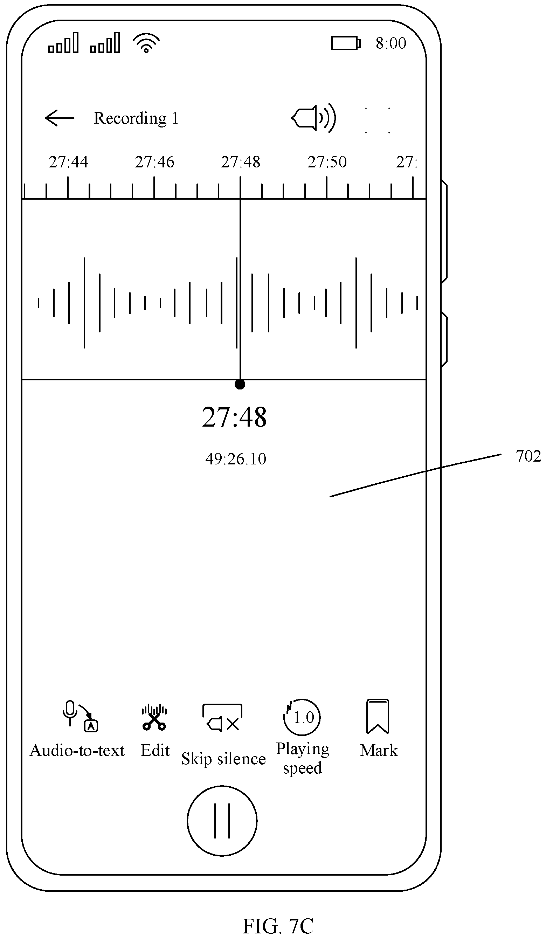

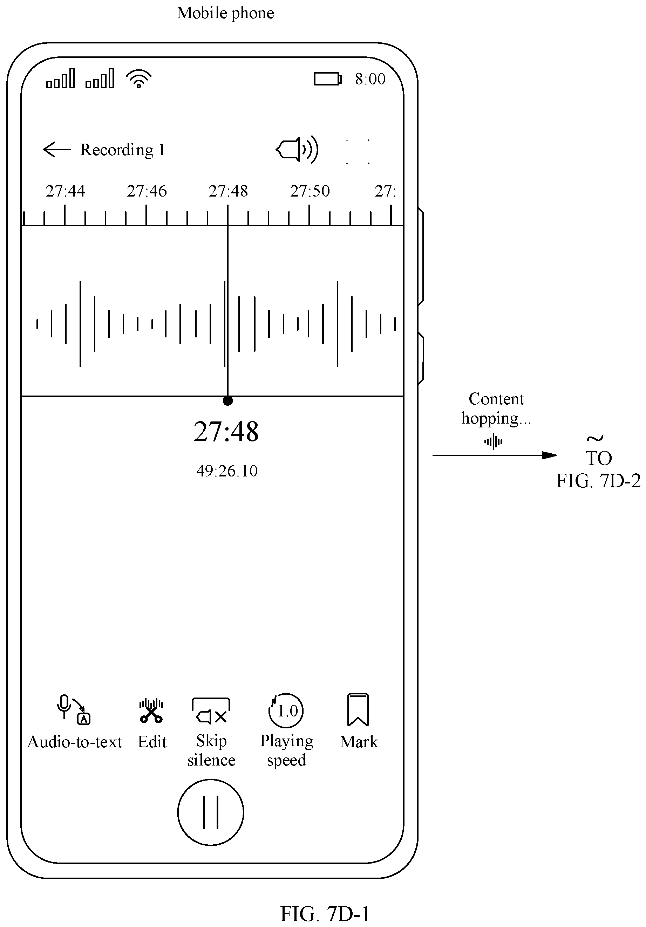

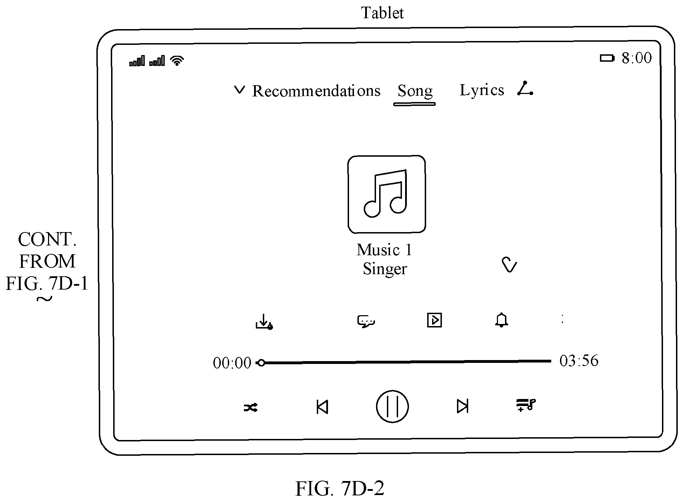

In the foregoing example, an example in which the another first audio application is implemented as a recording application is used. As shown in FIG. 4G, after the mobile phone hops the content of the music application 400 to the tablet, the mobile phone may display the home screen 40. As shown in FIG. 7A, the user continues to tap the recording application 401 on the home screen 40. In response to tapping the recording application 401 by the user, the mobile phone displays a recording interface 700 shown in FIG. 7B. The recording interface 700 includes a plurality of recordings. The user taps an option 701 of a recording 1 (namely, the first operation). In response to tapping the option 701 of the recording 1 by the user, the mobile phone displays an interface 702 of the recording 1 shown in FIG. 7C, and the mobile phone plays an audio of the recording 1. As shown in FIG. 7D-1 and FIG. 7D-2, the mobile phone displays an interface (for example, the interface 702 shown in FIG. 7C) corresponding to the recording application 401, and plays the audio of the recording 1. The tablet still displays the interface (for example, the interface 404 shown in FIG. 4D) of the music application 400, and plays the audio of the music 1.

Refer to FIG. 7B, FIG. 7C, FIG. 7D-1 and FIG. 7D-2, and FIG. 8. An example of an operation process of the first electronic device is described.

After implementing Embodiment 1, the first focus information of the first audio application is stored in the second focus stack, and the first focus information is placed on the top of the stack. In this case, the tablet plays the audio of the music 1.

Step S800: The another first audio application obtains the play operation.

As shown in FIG. 7B, the play operation is that the user taps the option 701 of the recording 1.

Step S801: The another first audio application applies to an audio framework of the first electronic device for an audio focus in response to the play operation.

Step S802: The audio framework places the first focus information of the another first audio application on the top of the first focus stack.

When the another first audio application successfully applies for the audio focus, the audio framework places the first focus information of the another first audio application on the top of the first focus stack, and notifies that the another first audio application obtains the audio focus. The another first audio application obtains permission to play an audio. As shown in FIG. 7C, the recording application 401 obtains permission to play an audio, and an audio output device on the mobile phone plays the audio of the recording 1.

In this embodiment of this application, the first focus information of the first audio application is stored in the second focus stack, and the first focus information of the another first audio application is stored in the first focus stack. The two pieces of focus information are independent of each other and do not affect each other. In this case, both of the first audio applications may obtain the audio focuses. The second electronic device can normally play the audio of the first audio application, and is not affected by the another first audio application. In addition, the first electronic device can also normally play the audio of the another first audio application, and is not affected by the first audio application.

### Embodiment 3

On the basis of Embodiment 2, in Embodiment 3, the user hops the another first audio application to the second electronic device.

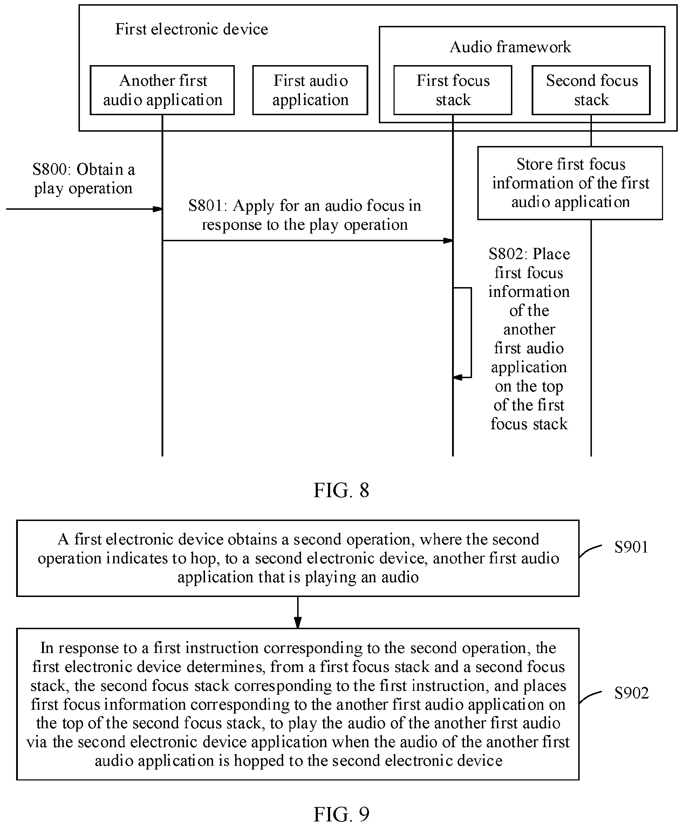

FIG. 9 shows an example of another audio control method according to an embodiment of this application.

Step S901: The first electronic device obtains a second operation, where the second operation indicates to hop, to the second electronic device, the another first audio application that is playing the audio.

For content of the second operation in step S901, refer to that in Embodiment 1. Details are not described herein again.

The second operation in Embodiment 1 and the second operation in Embodiment 3 both indicate to hop, to the second electronic device, the first audio application that is playing the audio. A difference between the two second operations lies in that the first audio application hopped in Embodiment 1 is different from that hopped in Embodiment 3.

Step S902: In response to a first instruction corresponding to the second operation, the first electronic device determines, from the first focus stack and the second focus stack, the second focus stack corresponding to the first instruction, and places the first focus information corresponding to the another first audio application on the top of the second focus stack, to play the audio of the another first audio via the second electronic device application when the audio of the another first audio application is hopped to the second electronic device.

The first instruction corresponding to the second operation in step S902 instructs to play the audio of the another first audio application hopped to the second electronic device. For content of the first instruction in step S902, refer to the first instruction in Embodiment 1. Details are not described herein again.

The first instruction in Embodiment 1 and the first instruction in Embodiment 3 both indicate to play the audio of the first audio application hopped to the second electronic device. A difference between the two first instructions lies in that the first audio application for playing the audio in Embodiment 1 is different from that in Embodiment 3.

In this embodiment of this application, the first focus information of the another first audio application is placed on the top of the second focus stack. In this case, the another first audio application obtains the audio focus and has the permission to play the audio. The audio framework notifies that the first audio application originally on the top of the second focus stack loses the audio focus. The another first audio application plays the audio, and plays the audio of the another first audio application via an audio output device on the second electronic device.

The first electronic device may determine, based on the first instruction instructing to play the audio via the first electronic device, that a focus stack corresponding to the first instruction is the second focus stack.

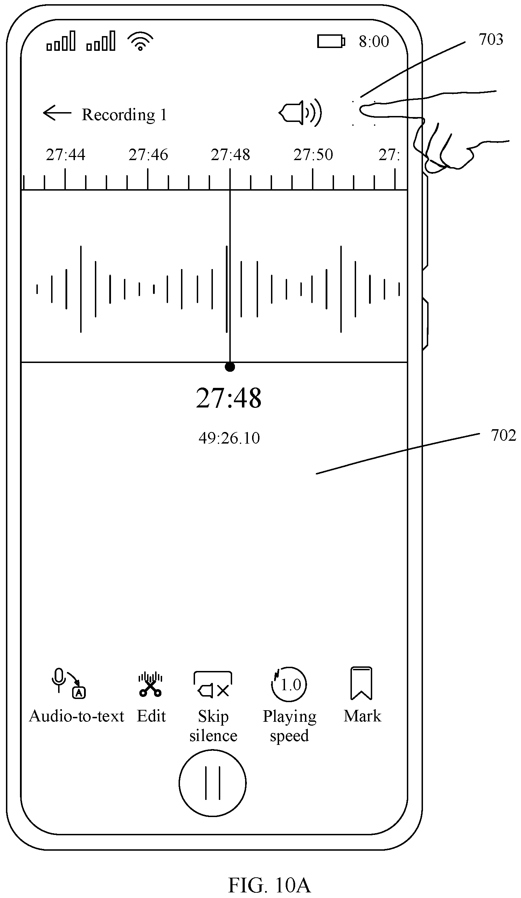

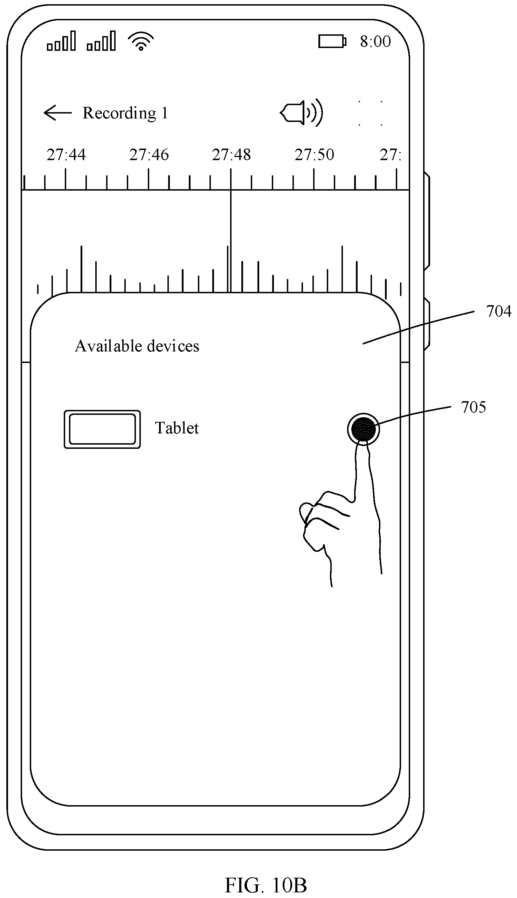

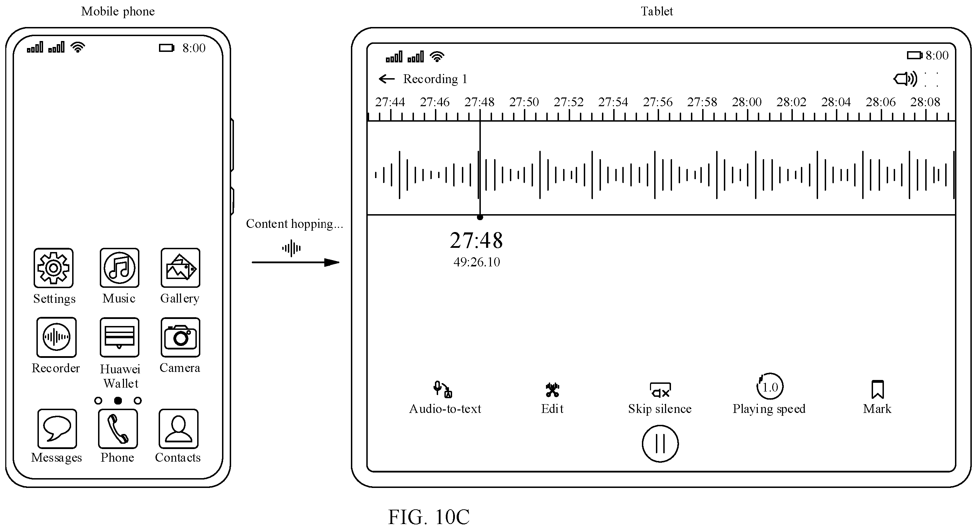

As shown in FIG. 10A, the recording interface 702 further includes a More option 703, and the user taps the More option 703. In response to tapping the More option 703 by the user, the mobile phone displays an available device list 704 and a tablet option 705 that are shown in FIG. 10B. The user taps the tablet option 705. In response to tapping the tablet option 705 by the user, the mobile phone hops content of the recording application 401 to the tablet. As shown in FIG. 10C, the tablet displays an interface (for example, the interface 702 shown in FIG. 7C or FIG. 10A) corresponding to the recording application 401, and plays the audio of the recording application 401.

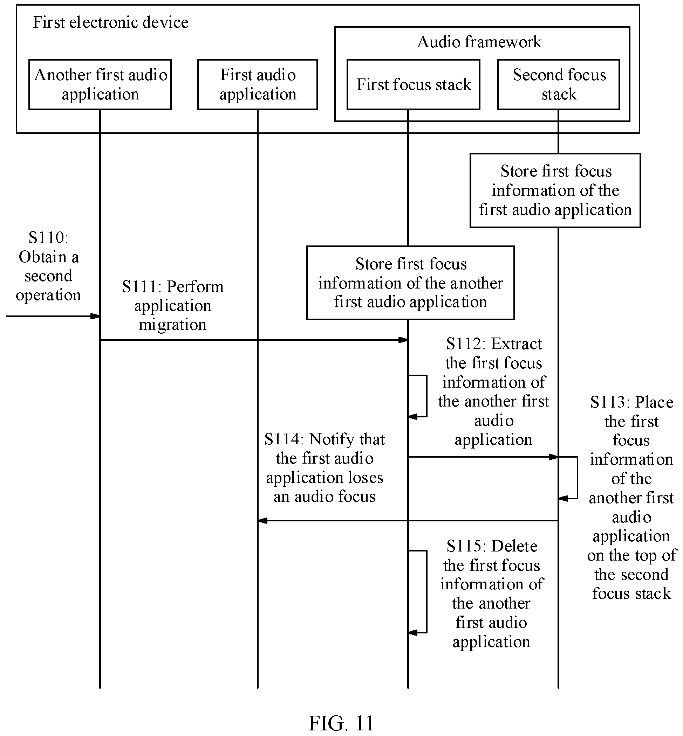

Refer to FIG. 10B, FIG. 10C, and FIG. 11. An example of an operation process of the first electronic device is described.

After implementing Embodiment 2, the first focus information of the first audio application is stored in the second focus stack, and the first focus information of the another first audio application is stored in the first focus stack.

Step S110: The another first audio application obtains the second operation.

As shown in FIG. 10B, the second operation is that the user taps the tablet option 705.

Step S111: The another first audio application performs application migration in response to the second operation.

As shown in FIG. 10B, the mobile phone enables the hop function in response to tapping the tablet option 705 by the user. The another first audio application performs application migration. The mobile phone migrates the recording application 401 to the tablet, and notifies the audio framework of information about migrating the recording application 401 to the tablet.

Step S112: The audio framework extracts the first focus information of the another first audio application.

In response to the information about migrating the recording application 401 to the tablet, the audio framework extracts, from the first focus stack, first focus information corresponding to the recording application 401.

Step S113: The audio framework places the first focus information of the another first audio application on the top of the second focus stack.

After extracting the first focus information of the another first audio application from the first focus stack, the audio framework places the first focus information of the another first audio application on the top of the second focus stack, so that the first focus information of the first audio application is no longer on the top of the second focus stack.

Step S114: The audio framework notifies that the first audio application loses the audio focus.

The audio framework notifies, based on a case in which the first focus information of the first audio application is no longer on the top location of the second focus stack, that the first audio application loses the audio focus. As shown in FIG. 10C, the music application 401 loses the audio focus, and the music application 401 stops playing based on the audio focus application type AUDIOFOCUS_GAIN_TRANSIENT_EXCLUSIVE applied for by the recording application.

Step S115: The audio framework deletes the first focus information of the another first audio application.

When adding the first focus information of the another first audio application to the second focus stack, the audio framework deletes the first focus information of the another first audio application from the first focus stack, that is, the first focus information of the another first audio application is popped.

Step S115 may be performed before step S113 or S114, or may be performed simultaneously with step S113 or S114.

In this embodiment of this application, the first focus information of the another first audio application is on the top of the stack, and the another first audio application may play the audio. When the second electronic device receives the audio of the another first audio application, the second electronic device plays the audio of the another first audio application. The first electronic device further notifies that another audio application (for example, the first audio application) in the second focus stack loses an audio focus. In this case, the first audio application performs adjustment based on an audio focus application type of the another first audio application. For example, playing of the audio of the first audio application may be paused or stopped, or volume of the audio is lowered. When playing of the audio of the first audio application is paused or stopped, the second electronic device plays only the audio of the first audio application. When volume of the audio of the first audio application is lowered, the second electronic device simultaneously plays the audio of the first audio application and the audio of the another first audio application.

### Embodiment 4

A difference between Embodiment 4 and Embodiment 3 lies in that Embodiment 4 further includes another second electronic device. After opening the another first audio application, the user hops the another first audio application to the another second electronic device.

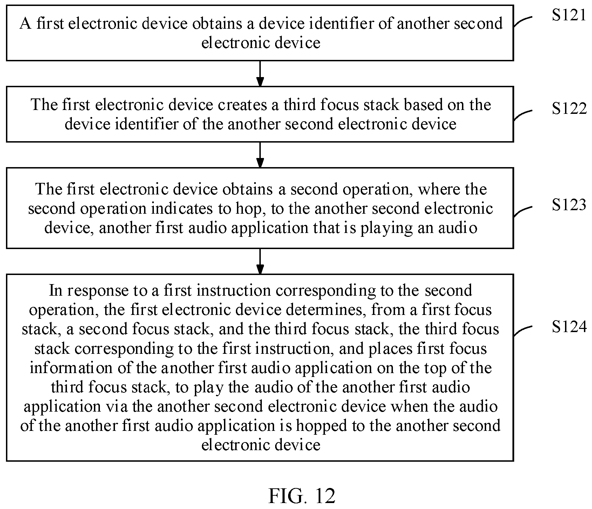

FIG. 12 shows an example of another audio control method according to an embodiment of this application.

Step S121: The first electronic device obtains a device identifier of the another second electronic device.

In this embodiment of this application, the first electronic device may obtain device identifiers of the one or more second electronic devices through a sensor. The sensor may include an ultra-wideband (Ultra Wide Band, UWB) sensor, an NFC sensor, a laser sensor, a visible light sensor, and/or the like. The device identifier may include an internet protocol (Internet Protocol, IP) address, a media access control (media access control, MAC) address, a UWB tag, an NFC tag, or the like. This is not specifically limited in this application.

An example in which the first electronic device is a mobile phone and the second electronic device is a laptop computer is used below for description.

For example, if a UWB sensor is installed on both the mobile phone and the laptop computer, and the mobile phone and the laptop computer each have a UWB tag (namely, a device identifier). When the user moves the mobile phone to make the mobile phone close to the laptop computer, the UWB sensor on the mobile phone obtains the UWB tag of the laptop computer.

For another example, if an NFC sensor is installed on both the mobile phone and the laptop computer, and the mobile phone and the laptop computer each have an NFC tag (namely, a device identifier). When the user uses the mobile phone to touch the laptop computer through OneHop, getting-close, or the like, the NFC sensor on the mobile phone obtains the NFC tag of the laptop computer.

In some embodiments, the first electronic device may be configured to obtain device identifiers of all second electronic devices with a same user account, or device identifiers of all second electronic devices connected to the first electronic device in a same network. The first electronic device may access a remote or cloud server or another electronic device to obtain a device identifier of the second electronic device, or may access a local internal memory to obtain the device identifier, or may access an external memory interface to obtain the device identifier. This is not specifically limited.

Step S122: The first electronic device creates a third focus stack based on the device identifier of the another second electronic device.

In this embodiment of this application, the first electronic device obtains the device identifier of the second electronic device, and creates the second focus stack based on the device identifier of the second electronic device. The first electronic device obtains the device identifier of the another second electronic device, and creates the third focus stack based on the device identifier of the another second electronic device.

In some embodiments, the second focus stack is associated with the device identifier of the second electronic device, and the third focus stack is associated with the device identifier of the another second electronic device. A stack name of the second focus stack may be named by using the device identifier of the second electronic device, and a stack name of the third focus stack may be named by using the device identifier of the another second electronic device. The stack name of the second focus stack is different from the stack name of the third focus stack.

If the first electronic device simultaneously obtains the device identifier of the second electronic device and the device identifier of the another second electronic device, the first electronic device may simultaneously create the second focus stack and the third focus stack. Alternatively, the first electronic device may separately create the second focus stack and the third focus stack on different occasions. For example, in Embodiment 2, the first electronic device may create the second focus stack in response to hopping the first audio application to the second electronic device; then, find the another second electronic device when subsequently opening the another first audio application or enabling a hop function of the another first audio application; and create the third focus stack based on the device identifier of the found another second electronic device. An occasion for creating a focus stack in addition to the first focus stack by the first electronic device and a quantity of focus stacks thereof are not specifically limited in this application.

Step S123: The first electronic device obtains a second operation, where the second operation indicates to hop, to the another second electronic device, the another first audio application that is playing the audio.

For content of the second operation in step S123, refer to that in Embodiment 3. Details are not described herein again.

The second operation in Embodiment 4 and the second operation in Embodiment 3 both indicate to hop, to the second electronic device, the another first audio application that is playing the audio. A difference between the two second operations lies in that the second electronic device to which the another first audio application is hopped in Embodiment 3 is different from the second electronic device to which the another first audio application is hopped in Embodiment 4.

Step S124: In response to a first instruction corresponding to the second operation, the first electronic device determines, from the first focus stack, the second focus stack, and the third focus stack, the third focus stack corresponding to the first instruction, and places the first focus information of the another first audio application on the top of the third focus stack, to play the audio of the another first audio application via the another second electronic device when the audio of the another first audio application is hopped to the another second electronic device.

The first instruction corresponding to the second operation in step S124 instructs to play the audio of the another first audio application hopped to the another second electronic device. For content of the first instruction in step S124, refer to the first instruction in Embodiment 3. Details are not described herein again.

The first instruction in Embodiment 4 and the first instruction in Embodiment 3 both indicate to play the audio of the another first audio application hopped to the second electronic device. A difference between the two first instructions lies in that the second electronic device for playing the audio in Embodiment 4 is different from that in Embodiment 3.

It is determined, from the first focus stack, the second focus stack, and the third focus stack based on the first instruction instructing to play the audio via the another second electronic device, that a focus stack corresponding to the first instruction is the third focus stack associated with the another second electronic device.

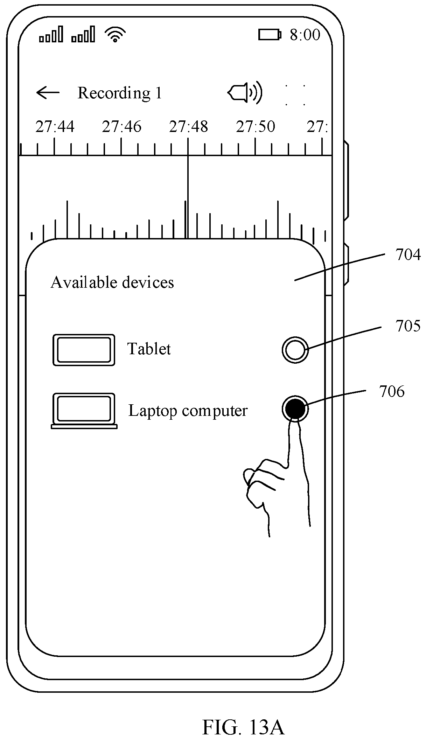

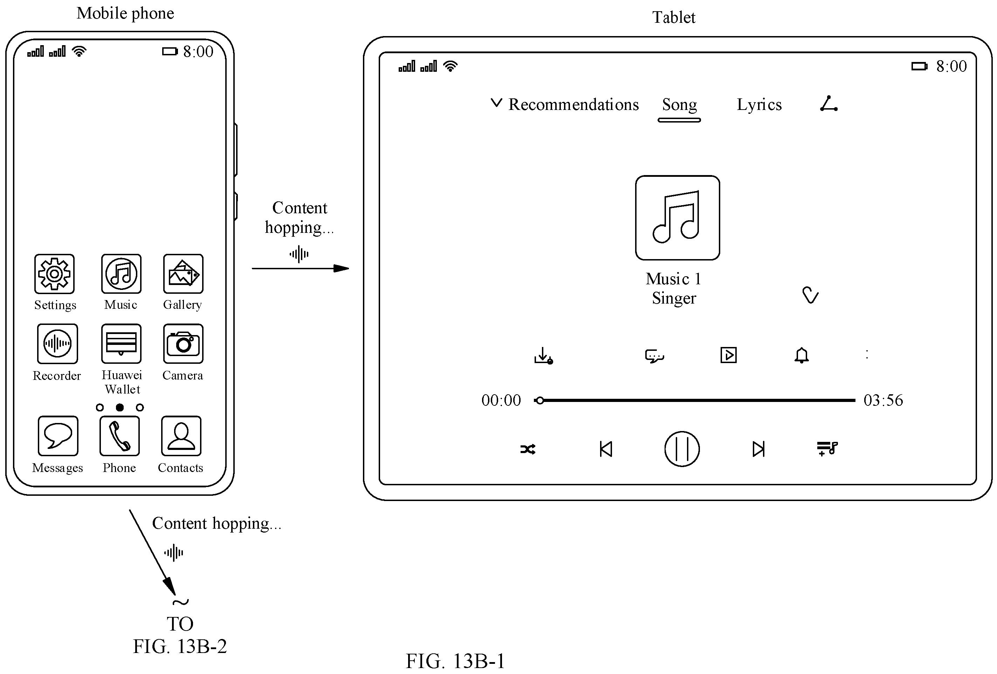

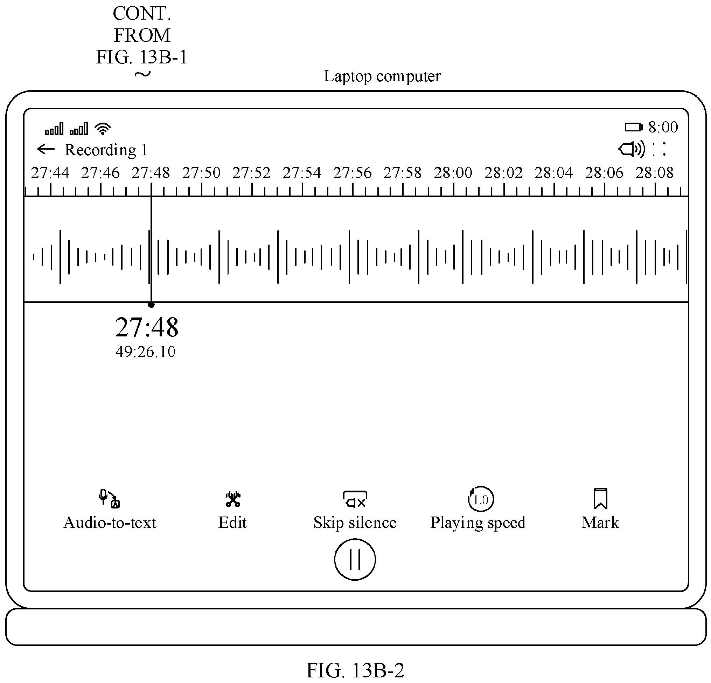

In the foregoing example, as shown in FIG. 10A, the user taps the More option 703. In this case, the first electronic device further finds the another second electronic device, for example, the laptop computer. As shown in FIG. 13A, the mobile phone displays an available device list 704, where the available device list 704 includes a tablet option 705 and a laptop computer option 706. The user taps the laptop computer option 706. In response to tapping the laptop computer option 706 by the user, the mobile phone hops content of the recording application 401 to the laptop computer. As shown in FIG. 13B-1 and FIG. 13B-2, the tablet displays the interface (for example, the interface 404 shown in FIG. 4D) of the music application 400, and plays the audio of the music application 400. The laptop computer displays the interface (for example, the interface 702 shown in FIG. 7C) corresponding to the recording application 401, and plays the audio of the recording application 401. The mobile phone may display the home screen.

In some embodiments, after step S124, the first electronic device opens another new first audio application (for example, a phone application) and performs playing on the first electronic device. In this case, the first electronic device plays the audio of the phone application. The audio of the music application played on the second electronic device is not affected, and the audio of the recording application played on the another second electronic device is not affected.

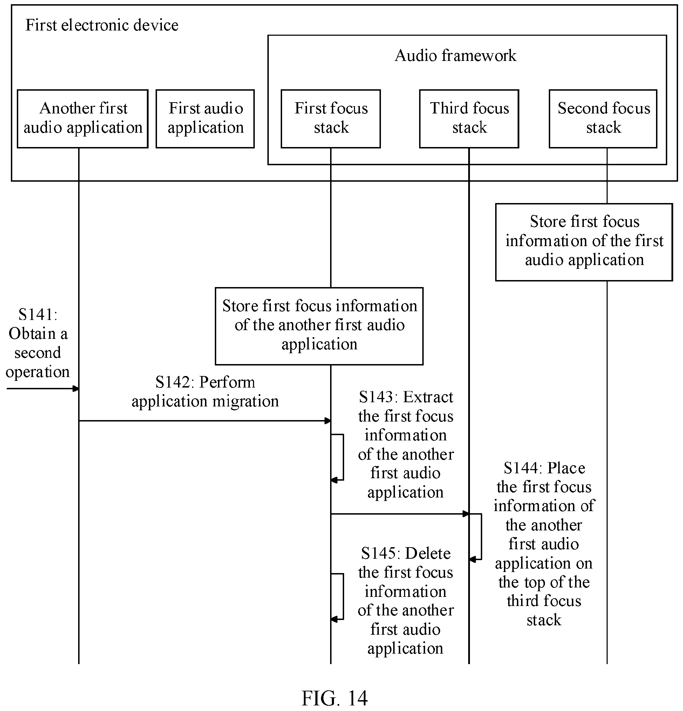

Refer to FIG. 13A, FIG. 13B-1 and FIG. 13B-2, and FIG. 14. An example of an operation process of the first electronic device is described.

After implementing Embodiment 2, the first focus information of the first audio application is stored in the second focus stack, and the first focus information of the another first audio application is stored in the first focus stack.

Step S141: The another first audio application obtains the second operation.

As shown in FIG. 13A, the second operation is that the user taps the laptop computer option 706.

Step S142: The another first audio application performs application migration.

As shown in FIG. 13A, the mobile phone enables the hop function in response to tapping the laptop computer option 706 by the user. The another first audio application performs application migration. The mobile phone migrates the recording application 401 to the laptop computer, and notifies the audio framework of information about migrating the recording application 401 to the laptop computer.

Step S143: The audio framework extracts the first focus information of the another first audio application.

In response to the information about migrating the recording application 401 to the laptop computer, the audio framework extracts, from the first focus stack, first focus information corresponding to the recording application 401.

Step S144: The audio framework places the first focus information of the another first audio application on the top of the third focus stack.

After extracting the first focus information of the another first audio application from the first focus stack, the audio framework places the first focus information of the another first audio application on the top of the third focus stack. As shown in FIG. 13B-1 and FIG. 13B-2, the recording application 401 obtains an audio focus, and when the laptop computer receives the audio of the recording application 401, the laptop computer plays the audio of the recording application 401.

Step S145: The audio framework deletes the first focus information from the first focus stack.

When adding the first focus information of the another first audio application to the third focus stack, the audio framework deletes the first focus information of the another first audio application from the first focus stack, that is, the first focus information of the another first audio application is popped.

Step S145 may be performed before step S144, or may be performed simultaneously with step S144.

In this embodiment of this application, the second electronic device can normally play the audio of the first audio application, and is not affected by the another first audio application. In addition, the another second electronic device can also normally play the audio of the another first audio application, and is not affected by the first audio application. The first electronic device can also normally play the audio of the new first audio application, so that the first electronic device can hop content of a plurality of different first audio applications to different second electronic devices, and the audio played by the first electronic device and audios played by the plurality of different second electronic devices do not affect each other.

### Embodiment 5

A difference between Embodiment 5 and Embodiment 1 lies in that the first electronic device hops, to the second electronic device, the first audio application that plays no audio.

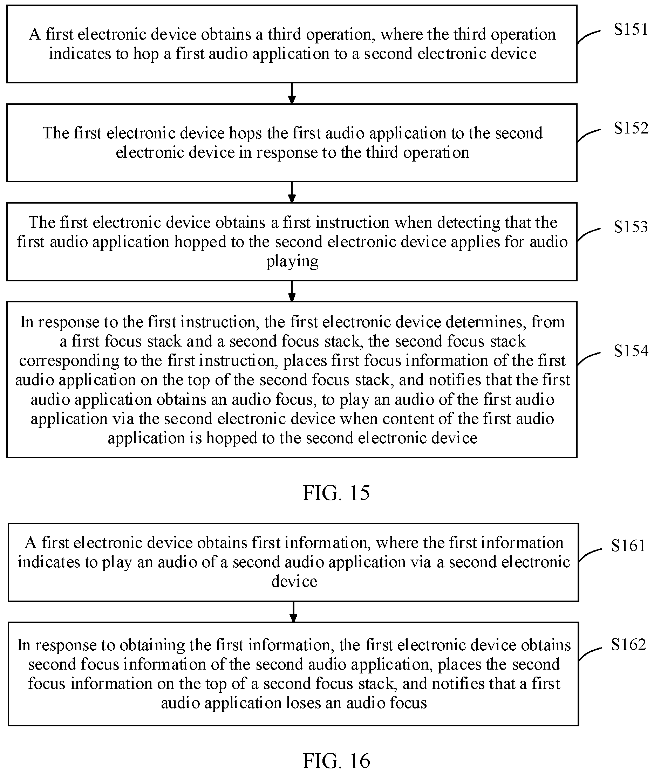

FIG. 15 shows an example of another audio control method according to an embodiment of this application.

Step S151: The first electronic device obtains a third operation, where the third operation indicates to hop the first audio application to the second electronic device.

For example, the third operation may be a tap operation, a touch operation, a touch and hold operation, a voice operation, or the like. The third operation is that the user enables the hop function on an interface of the first audio application. A difference between the hop function enabled in the third operation and the hop function enabled in the second operation lies in that the first audio application hopped in the third operation does not include the audio of the audio application.

Step S152: The first electronic device hops the first audio application to the second electronic device in response to the third operation.

Step S153: The first electronic device obtains a first instruction when detecting that the first audio application hopped to the second electronic device applies for audio playing.

In this embodiment of this application, after the user hops the first audio application to the second electronic device, the user taps a play control of the first audio application on the second electronic device, and the second electronic device transmits, to the first electronic device, information indicating that the first audio application applies for playing. For example, the second electronic device may transmit information "play the audio of the first audio application" to the first electronic device through reverse control. In this case, the first audio application hopped to the second electronic device obtains the information "play the audio of the first audio application", and the first audio application applies to the audio framework of the first electronic device for audio playing. When the first electronic device detects that the first audio application applies for audio playing, the first electronic device obtains the first instruction.

In a possible implementation, a communication connection is established between the first electronic device and the second electronic device, and the first electronic device may obtain, through the communication connection to the second electronic device, information indicating that "the first audio application hopped to the second electronic device applies for audio playing". For example, the communication connection may be established between the first electronic device and the second electronic device through a distribute mobile sensing development platform (distribute mobile sensing development platform, DMSDP) service. When the user taps the play control of the first audio application on the second electronic device, the first electronic device may obtain, from the second electronic device through the distribute mobile sensing development platform service, the information indicating that "the first audio application hopped to the second electronic device applies for audio playing". In this case, the first audio application applies to the audio framework of the first electronic device for audio playing, and the first electronic device obtains the first instruction.

Step S154: In response to the first instruction, the first electronic device determines, from the first focus stack and the second focus stack, the second focus stack corresponding to the first instruction, places the first focus information of the first audio application on the top of the second focus stack, and notifies that the first audio application obtains the audio focus, to play the audio of the first audio application via the second electronic device when the content of the first audio application is hopped to the second electronic device.

In this embodiment of this application, the first electronic device may hop, to the second electronic device, the first audio application that does not play the audio. When the user operates the second electronic device to play the audio of the first audio application, the first electronic device places the first focus information of the first audio application in the second focus stack, and the second electronic device plays the audio of the first audio application. Based on a case in which the first focus information corresponding to the first audio application that plays the audio via the second electronic device is stored in the second focus stack, the first focus stack and the second focus stack are independent of each other, and the audio played by the first electronic device and the audio played by the second electronic device do not affect each other.

### Embodiment 6

In the foregoing embodiments, the first electronic device hops the first audio application to the second electronic device. In Embodiment 6, after the second electronic device plays the audio of the first audio application, the user starts a second audio application installed on the second electronic device and plays an audio of the second audio application.

FIG. 16 shows an example of another audio control method according to an embodiment of this application.

Step S161: The first electronic device obtains first information, where the first information indicates to play the audio of the second audio application via the second electronic device.

In this embodiment of this application, a communication connection is established between the first electronic device and the second electronic device, and the second electronic device may transmit the first information to the first electronic device in response to an operation of starting and playing the second audio application by the user.

In some embodiments, when detecting the operation of starting and playing the second audio application by the user, the second electronic device may transmit the first information to the first electronic device through a distribute mobile sensing development platform service. The first electronic device obtains the first information from the second electronic device through the distribute mobile sensing development platform service.

In some other embodiments, when detecting the operation of starting and playing the second audio application by the user, the distribute mobile sensing development platform service deployed on the second electronic device transmits the first information to the first electronic device.

Step S162: In response to obtaining the first information, the first electronic device obtains second focus information of the second audio application, places the second focus information on the top of the second focus stack, and notifies that the first audio application loses the audio focus.

In this embodiment of this application, in response to obtaining the first information, the first electronic device obtains the second focus information corresponding to the second audio application indicated by the first information, determines the second electronic device corresponding to the first information, then determines a corresponding focus stack (a focus stack other than the first focus stack) based on the determined second electronic device, and adds the second focus information to the determined focus stack.

In some embodiments, the first electronic device obtains, through the communication connection to the second electronic device, the second focus information in a case in which the second audio application applies for an audio focus, or obtains, through the distribute mobile sensing development platform service, the second focus information in a case in which the second audio application applies for the audio focus.

In some embodiments, the placing the second focus information on the top of the second focus stack may be: After obtaining the second focus information, the first electronic device may create a new focus request object based on the obtained second focus information, where the new focus request object stores content of the second focus information, and place the new focus request object on the top of the second focus stack.

In Embodiment 4, the first audio application is hopped to the second electronic device, and the another first audio application is hopped to the another second electronic device. When a second audio application A is opened on the second electronic device and an audio is played, second focus information A1 of the second audio application A is added to the second focus stack. The first focus information of the first audio application and the second focus information A1 are stored in the second focus stack. When a second audio application B is opened on the another second electronic device and an audio is played, second focus information B1 of the second audio application B is added to the third focus stack. The first focus information of the another first audio application and the second focus information B1 are stored in the third focus stack.

In this embodiment of this application, in response to the second audio application obtaining the audio focus, the first electronic device notifies that the first audio application loses the audio focus. In response to losing the audio focus, the first audio application may obtain an audio focus application type of the second audio application, and then pause or stop playing or lower volume based on the audio focus application type.

In the foregoing example, the first electronic device hops the content (the music 1) of the music application 400 to the second electronic device, and the second electronic device plays the audio of the music 1. The user opens a second audio application (for example, a video application) installed on the second electronic device. The music application 400 pauses playing the audio based on an audio focus application type AUDIOFOCUS_GAIN of the video application, and the second electronic device plays an audio of the video application. For another example, the user opens a second audio application, namely, a map application, installed on the second electronic device. The music application reduces a playing sound of the music application (but can still perform playing) based on an audio focus application type AUDIOFOCUS_GAIN_TRANSIENT_MAY_DUCK of the map application. In this case, the second electronic device performs playing in mixed mode, and simultaneously plays a navigation audio of the map application and the audio of the audio application.

### Embodiment 7

Based on Embodiment 6, in Embodiment 7, the second audio application opened by the user loses the audio focus.

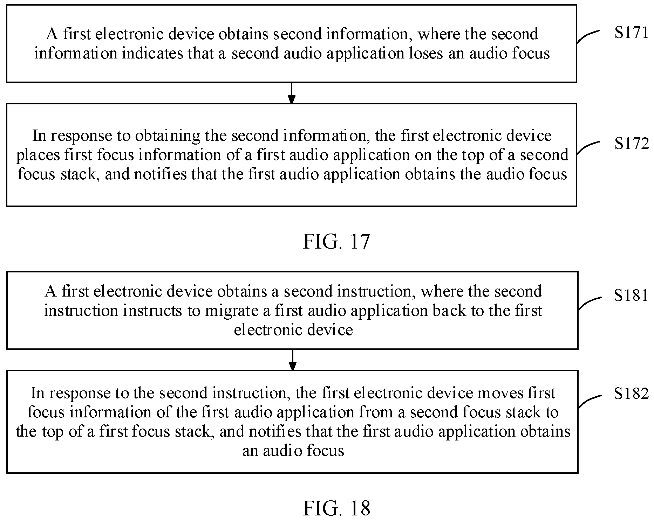

FIG. 17 shows an example of another audio control method according to an embodiment of this application.

Step S171: The first electronic device obtains second information, where the second information indicates that the second audio application loses the audio focus.

In this embodiment of this application, the communication connection is established between the first electronic device and the second electronic device, and the second electronic device may transmit the second information to the first electronic device in response to the second audio application losing the audio focus.

In some embodiments, when detecting that the second audio application loses the audio focus, the second electronic device may transmit the second information to the first electronic device through the distribute mobile sensing development platform service, and the first electronic device obtains the second information from the second electronic device through the distribute mobile sensing development platform service.

In some other embodiments, when detecting that the second audio application loses the audio focus, the distribute mobile sensing development platform service deployed on the second electronic device transmits the second information to the first electronic device.

In this embodiment of this application, a case in which the second audio application loses the audio focus includes but is not limited to the following cases: Another second audio application on the second electronic device applies for audio playing via the second electronic device, and the another second audio application successfully applies for an audio focus; the second audio application applies for a transient audio focus, and audio playing is completed or the second audio application is closed.

When the second electronic device is powered off or the second electronic device is disconnected from the first electronic device, the first electronic device may stop hopping the content of the first audio application to the second electronic device.

Step S172: In response to obtaining the second information, the first electronic device places the first focus information of the first audio application on the top of the second focus stack, and notifies that the first audio application obtains the audio focus.

In this embodiment of this application, the first electronic device hops the first audio application to the second electronic device for playing, and the first focus information of the first audio application is placed on the top of the second focus stack. The second audio application on the second electronic device applies for audio playing, the second focus information of the second audio application is placed on the top of a second focus stack, and the first focus information is located below the second focus information. In response to obtaining the second information, the first electronic device removes the second focus information from the second focus stack, so that the first focus information of the first audio application is placed on the top of the second focus stack.

For example, the first electronic device hops the content of the music application to the second electronic device, and the second electronic device plays the audio of the music application. The user opens the map application installed on the second electronic device, second focus information of the map application is located on the top of the second focus stack, and the first focus information of the music application is located below the second focus information. The second electronic device plays an audio of the map application, and the map application applies for a transient audio focus. After the map application completes playing of a navigation voice, the map application releases the audio focus. That is, the map application loses the audio focus, the second focus information on the top of the second focus stack is removed, and the first focus information of the music application is on the top of the second focus stack. The music application obtains the audio focus. When the second electronic device receives the audio of the music application, the second electronic device may continue to play the audio of the music application.

In some embodiments, the first electronic device hops a plurality of first audio applications to a plurality of second electronic devices. When the first electronic device obtains the second information, in response to obtaining the second information, the first electronic device determines, from a plurality of focus stacks, a focus stack corresponding to the second information, and removes, from the determined focus stack, the second focus information corresponding to the second information.

In the case in Embodiment 4, the first audio application is hopped to the second electronic device, and the another first audio application is hopped to the another second electronic device. When the second audio application on the second electronic device loses the audio focus, in response to obtaining the second information, the first electronic device determines, from the second focus stack and the third focus stack based on the second information, that a focus stack corresponding to the second information is the second focus stack, determines the second focus information of the second audio application corresponding to the second information, and removes the second focus information from the second focus stack. In this case, the first focus information of the first audio application is placed on the top of the second focus stack, and the first audio application is notified that the first audio application obtains the audio focus, so that the second electronic device may play the audio of the first audio application.

When the another second audio application on the another second electronic device loses the audio focus, in response to obtaining the second information, the first electronic device determines, from the second focus stack and the third focus stack based on the second information, that a focus stack corresponding to the second information is the third focus stack, determines the second focus information of the another second audio application corresponding to the second information, and removes the second focus information of the another second audio application from the third focus stack. In this case, the first focus information of the another first audio application is placed on the top of the third focus stack, and the another first audio application is notified that the another first audio application obtains the audio focus, so that the another second electronic device may play the audio of the another first audio application.

In Embodiment 1 to Embodiment 7, the second electronic device receives the audio of the hopped first audio application. In this case, if the second audio application on the second electronic device also applies for playing, the second electronic device may determine, according to a preset strategy, to play the audio. For example, an audio corresponding to a latest event may be set for playing. The second electronic device first receives the audio of the hopped first audio application, and then the second electronic device opens the second audio application. In this case, the second electronic device preferentially plays the audio of the second audio application. Correspondingly, the second electronic device is playing the audio of the second audio application. In this case, the second electronic device receives the audio of the hopped first audio application, and the second electronic device preferentially plays the audio of the first audio application.

### Embodiment 8

In the foregoing embodiment, the first electronic device has migrated the first audio application to the second electronic device. In Embodiment 8, the user migrates the first audio application back to the first electronic device.

FIG. 18 shows an example of another audio control method according to an embodiment of this application.

Step S181: The first electronic device obtains a second instruction, where the second instruction instructs to migrate the first audio application back to the first electronic device.

In this embodiment of this application, after the first audio application is migrated to the second electronic device, when the first electronic device detects that the user taps an icon of the first audio application, the first electronic device obtains the second instruction. Alternatively, the user performs a migrate-back operation on the first audio application on the second electronic device, and the second electronic device transmits the second instruction to the first electronic device. Alternatively, when detecting that the user performs a migrate-back operation on the first audio application on the second electronic device, the distribute mobile sensing development platform service deployed on the second electronic device transmits the second instruction to the first electronic device.

Step S182: In response to the second instruction, the first electronic device moves the first focus information of the first audio application from the second focus stack to the top of the first focus stack, and notifies that the first audio application obtains the audio focus.

In this embodiment of this application, the first electronic device determines, in response to the second instruction, a focus stack corresponding to the second instruction, then extracts the first focus information of the first audio application from the determined focus stack, and places the extracted first focus information in the first focus stack.

For example, when the first electronic device migrates the first audio application to the second electronic device, the first focus information of the first audio application is stored in the second focus stack. The first electronic device determines the second focus stack in response to the second instruction, and the first electronic device moves the first focus information from the second focus stack to the first focus stack. When the first electronic device migrates the first audio application to another second electronic device, the first focus information of the first audio application is stored in the third focus stack. The first electronic device determines the third focus stack in response to the second instruction, and the first electronic device moves the first focus information from the third focus stack to the first focus stack. When the first focus information in the first focus stack is placed on the top of the stack, the first audio application corresponding to the first focus information obtains permission to play the audio, and the first electronic device may play the audio of the first audio application.

In this embodiment of this application, after migrating the first audio application back to the second electronic device to play the audio, the first electronic device may migrate the first audio application back to the first electronic device to play the audio.

In the foregoing embodiment, for a plurality of first audio applications on the first electronic device, when the plurality of first audio applications play audios via different electronic devices (for example, the first electronic device, the second electronic device, or the another second electronic device), a plurality of focus stacks on the first electronic device respectively maintain focus information of the plurality of first audio applications. In this way, audio playing of the plurality of first audio applications is separately managed. The following describes how the second electronic device manages the hopped first audio application, to implement distributed audio management.

### Embodiment 9

A difference between Embodiment 9 and Embodiment 1 to Embodiment 8 lies in that the second electronic device may maintain only one first local focus stack (similar to the first focus stack), and the first electronic device may also maintain only one second local focus stack (namely, the first focus stack).

The first electronic device and the second electronic device each include a focus stack. The first local focus stack of the second electronic device is used to store focus information of an audio application (including the second audio application installed on the second electronic device and the first audio application hopped from the first electronic device to the second electronic device) that plays an audio via the second electronic device. The second local focus stack of the first electronic device is used to store focus information of an audio application that applies for audio playing via the first electronic device.

The focus stack may ensure, based on a preset maintenance order, that an audio application corresponding to only one piece of focus information obtains an audio focus at a time. The focus stack (for example, the first local focus stack or the second local focus stack) in this embodiment of this application may be implemented as a stack, or may be implemented as an array, a queue, a map, or the like. This is not specifically limited in this application.

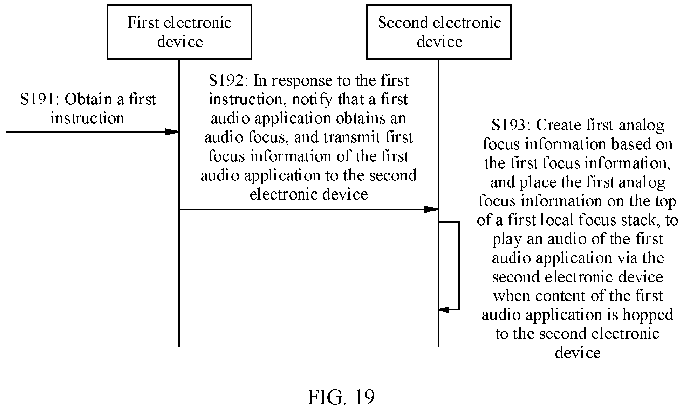

FIG. 19 shows an example of another audio control method according to an embodiment of this application.

Step S191: The first electronic device obtains a first instruction.

That the first electronic device obtains a first instruction includes but is not limited to the following cases: The first electronic device obtains the first instruction when the first electronic device detects that the user hops, to the second electronic device, the first audio application that is playing the audio; or the first electronic device obtains the first instruction when the first electronic device has hopped, to the second electronic device, the first audio application that plays no audio, or the second electronic device detects that the hopped first audio application applies for audio playing, or the second electronic device transmits, to the first electronic device, information indicating that the hopped first audio application applies for audio playing. For related content of the first instruction, refer to that in the foregoing embodiment. Details are not described herein again.

Step S192: The first electronic device notifies, in response to the first instruction, that the first audio application obtains an audio focus, and transmits first focus information of the first audio application to the second electronic device.

In this embodiment of this application, the first electronic device notifies, in response to the first instruction, that the first audio application obtains the audio focus, and the first audio application obtains permission to play the audio. The first electronic device may transmit content (for example, an audio, an interface, and the first focus information for applying for the audio focus) of the first audio application to the second electronic device through a communication connection between the first electronic device and the second electronic device.

Step S193: The second electronic device creates first analog focus information based on the first focus information, and places the first analog focus information on the top of the first local focus stack, to play the audio of the first audio application via the second electronic device when the content of the first audio application is hopped to the second electronic device.

In this embodiment of this application, the second electronic device simulates, based on the first focus information, the first audio application to apply to the audio framework of the second electronic device for the first analog focus information, and adds the first analog focus information to the first local focus stack of the second electronic device. The first focus information is similar to the first analog focus information, and at least an audio focus application type in the first focus information is consistent with an audio focus application type in a first analog focus. The second electronic device places the first analog focus information on the top of the first local focus stack, and notifies that an audio application corresponding to other focus information in the first local focus stack loses an audio focus. In this case, the audio application that loses the audio focus pauses or stops playing or lowers volume based on the corresponding audio focus application type in the first analog focus information. In addition, the second electronic device may notify, through the communication connection between the second electronic device and the first electronic device, the first electronic device of information indicating that the first audio application obtains the audio focus. In this case, the first audio application has permission to play the audio, and can play the audio. When the second electronic device receives the audio of the first audio application, the second electronic device plays the audio of the first audio application.

In this embodiment of this application, the first electronic device transmits, to the second electronic device in response to the first instruction, the first focus information corresponding to the first audio application indicated by the first instruction. The second electronic device may create the first analog focus information based on the first focus information, and add the first analog focus information to the first local focus stack of the second electronic device. The second electronic device indirectly manages the first audio application hopped to the second electronic device. The first focus information corresponding to the first audio application that applies for audio playing on the first electronic device is added to the second local focus stack of the first electronic device, and the first local focus stack and the second local focus stack are independent of each other. Therefore, the first audio application that plays the audio via the second electronic device and another first audio application that plays an audio via the first electronic device do not affect each other.

### Embodiment 10

A difference between Embodiment 10 and Embodiment 9 lies in that a new second audio application is opened on the second electronic device after the first electronic device hops the first audio application to the second electronic device.

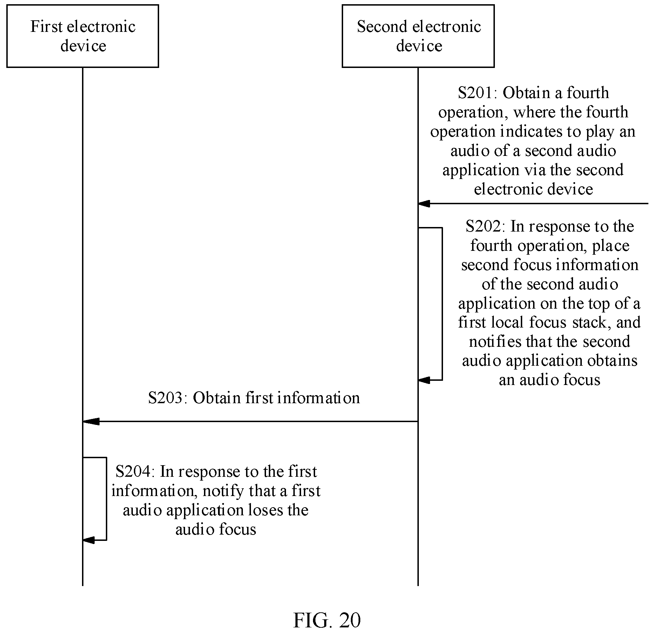

FIG. 20 shows an example of another audio control method according to an embodiment of this application.

Step S201: The second electronic device obtains a fourth operation, where the fourth operation indicates to play an audio of the second audio application via the second electronic device.

The second audio application is installed on the second electronic device. The second electronic device may obtain the fourth operation when detecting an operation of starting and playing the second audio application by the user. The fourth operation may be a tap operation, a touch operation, a touch and hold operation, a voice operation, or the like. For example, the fourth operation may be tapping a play control on the second audio application.

Step S202: In response to the fourth operation, the second electronic device places second focus information of the second audio application on the top of the first local focus stack, and notifies that the second audio application obtains an audio focus.

In Embodiment 9, the second electronic device stores the first analog focus information in the first local focus stack of the second electronic device, and when the first analog focus information is on the top of the stack, the second electronic device plays the audio of the first audio application. In step S202, the second electronic device adds the second focus information of the second audio application to the first local focus stack, the second focus information of the second audio application is on the top of the stack, and the first analog focus information is located below the second focus information of the second audio application. In this case, the second electronic device notifies that the second audio application obtains the audio focus.

Step S203: The first electronic device obtains first information.

The first information indicates to play the audio of the second audio application via the second electronic device

For content of obtaining the first information by the first electronic device, refer to that in Embodiment 6.

When placing the second focus information of the second audio application on the top of the first local focus stack, the second electronic device notifies that the second audio application obtains the audio focus. In addition, the second electronic device notifies, through the communication connection to the first electronic device, the first electronic device that the second audio application obtains the audio focus. In this case, the first electronic device obtains the first information.

Step S204: In response to obtaining the first information, the first electronic device notifies that the first audio application loses the audio focus.

In this embodiment of this application, when the second audio application obtains the audio focus, the second electronic device plays the audio of the second audio application.

When the first electronic device notifies the first audio application that the first audio application loses the audio focus, in response to losing the audio focus, the first audio application may obtain an audio focus application type of the second audio application, and then pause or stop playing or lower volume based on the audio focus application type.

### Embodiment 11

A difference between Embodiment 11 and each of Embodiment 9 and Embodiment 10 lies in that the first electronic device has migrated the first audio application to the second electronic device, but the user migrates the first audio application back to the first electronic device in Embodiment 11.

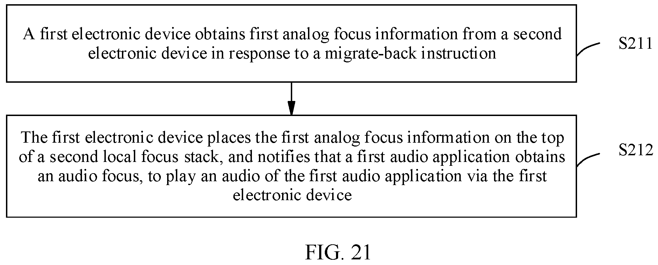

FIG. 21 shows an example of another audio control method according to an embodiment of this application.

Step S211: The first electronic device obtains first analog focus information from the second electronic device in response to a migrate-back instruction.

The migrate-back instruction instructs to migrate the first audio application back to the first electronic device.

In this embodiment of this application, after the first audio application is migrated to the second electronic device, when detecting that the user taps the icon of the first audio application, the first electronic device obtains the migrate-back instruction (corresponding to the fourth instruction in the foregoing embodiment). Alternatively, the user performs a migrate-back operation on the first audio application on the second electronic device (for example, migrates the first audio application to the first electronic device through tapping), and the second electronic device transmits the migrate-back instruction to the first electronic device.

In this case, the first electronic device obtains the first analog focus information from the corresponding second electronic device based on the migrated back first audio application instructed in the migrate-back instruction. In the case in Embodiment 4, the first audio application is hopped to the second electronic device for playing, and the another first audio application is hopped to the another second electronic device for playing. When the migrate-back instruction received by the first electronic device instructs to migrate back the first audio application on the second electronic device, the first analog focus information of the first audio application is obtained from the second electronic device. When the migrate-back instruction instructs to migrate back the another first audio application on the another second electronic device, first analog focus information of the another first audio application is obtained from the another second electronic device.

Step S212: The first electronic device places the first analog focus information on the top of the second local focus stack, and notifies that the first audio application obtains the audio focus, to play the audio of the first audio application via the first electronic device.

For example, in step S211, the first electronic device obtains the first analog focus information, and then creates new first analog focus information based on the obtained first analog focus information. The new first analog focus information is added to the second local focus stack of the first electronic device. When the new first analog focus information is located on the top of the second local focus stack, the first electronic device notifies that the first audio application corresponding to the new first analog focus information obtains the audio focus, where the first audio application has permission to play the audio. The first electronic device plays the audio of the first audio application.

It should be noted that the first electronic device in Embodiment 9 to Embodiment 11 may alternatively maintain two or two focus stacks. This is not specifically limited in this application.

Embodiments of this application may alternatively be applied to focus management, for example, window focus management. For example, after the first electronic device hops, to the second electronic device, a first application A installed on the first electronic device, a window focus corresponding to the first application A is stored in a first bucket. Correspondingly, if the user opens a first application B installed on the first electronic device, a window focus corresponding to the first application B may be stored in a second bucket. The first bucket is used to store the window focus of the first application hopped to the second electronic device. The second bucket is used to store the window focus of the first application on the first electronic device. The first bucket and the second bucket are set, so that the two applications each can obtain the focus, and the focuses can be well managed.

In some embodiments, if the first electronic device respectively hops N first applications to N second electronic devices, window focuses corresponding to the N first applications may be respectively stored in N first buckets, and the N first buckets respectively correspond to the second electronic devices to which the N first applications are hopped. When there are a plurality of applications hopped to the second electronic device, focuses of the plurality of applications can be well managed.

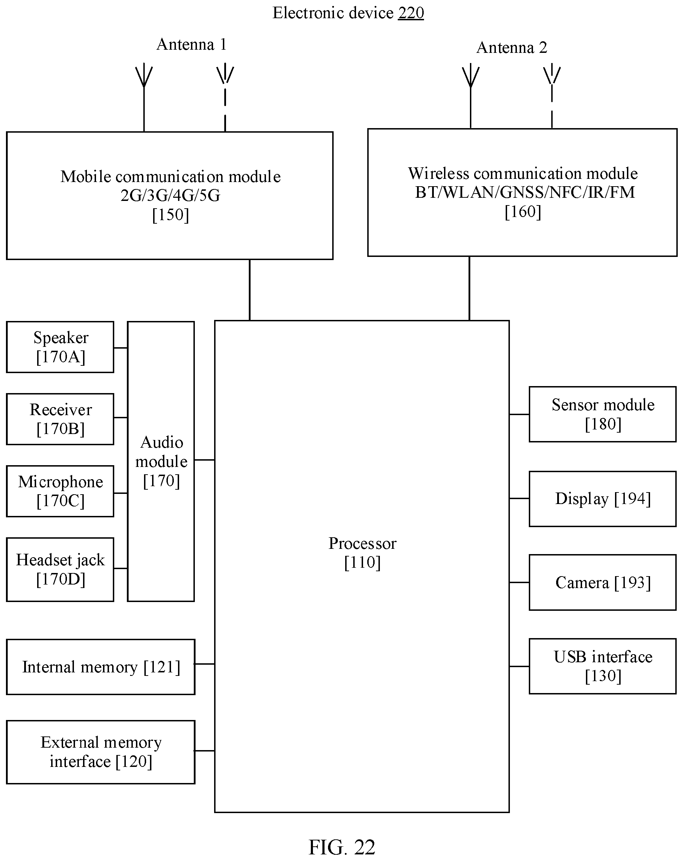

FIG. 22 shows an example of a structure of an electronic device 220 provided in this application. The electronic device 220 may be the first electronic device or the second electronic device.

The electronic device 220 may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, and the like.

The structure shown in this embodiment of the present invention does not constitute a specific limitation on the electronic device 220. In some other embodiments of this application, the electronic device 220 may include more or fewer components than those shown in the figure, or a combination of some components, or splits from some components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache. The memory may store instructions or data that just used or cyclically used by the processor 110. If the processor 110 needs to use the instructions or the data again, the processor may directly call the instructions or the data from the memory. This avoids repeated access, and reduces waiting time of the processor 110, to improve system efficiency.

A wireless communication function of the electronic device 220 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 can provide a solution, applied to the electronic device 220, to wireless communication including 2G/3G/4G/5G, or the like. In some embodiments, at least some functional modules in the mobile communication module 150 may be disposed in the processor 110.

In some embodiments, at least some functional modules in the mobile communication module 150 may be disposed in a same device as at least some modules in the processor 110.

The wireless communication module 160 may provide a solution, applied to the electronic device 220, to wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the electronic device 220, the antenna 1 and the mobile communication module 150 are coupled, and the antenna 2 and the wireless communication module 160 are coupled, so that the electronic device 220 can communicate with a network and another device by using a wireless communication technology.

The electronic device 220 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 220 may include one or N displays 194, where N is a positive integer greater than 1.

The electronic device 220 may implement a photographing function through the ISP, the camera 193, the video codec, the GPU, the display 194, the application processor, and the like.

The camera 193 is configured to capture a static image or a video. An optical image of an object is generated through the lens, and is projected onto the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 220 may include one or N cameras 193, where N is a positive integer greater than 1.

The external memory interface 120 may be configured to connect to an external memory card, for example, a micro SD card, to extend a storage capability of the electronic device 220. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 220 and data processing. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 220, and the like. In addition, the internal memory 121 may include a highspeed random access memory, or may include a non-volatile memory, for example, at least one magnetic disk storage device, a flash memory, or a universal flash storage (universal flash storage, UFS).

The electronic device 220 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for an output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 220 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 220, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 220. In some other embodiments, two microphones 170C may be disposed in the electronic device 220, to collect a sound signal and implement a noise reduction function. In some other embodiments, three, four, or more microphones 170C may alternatively be disposed in the electronic device 220, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

Certainly, the electronic device 220 may further include a charging management module, a power management module, a battery, a button, an indicator, one or more SIM card interfaces, and the like. This is not limited in embodiments of this application.

An embodiment of this application further provides a computer program product. When the computer program product runs on a computer, the computer is enabled to perform the foregoing related steps, to implement the audio control methods in the foregoing method embodiments.

An embodiment of this application further provides a computer storage medium, including computer instructions. When the computer instructions are run on an electronic device, the electronic device is enabled to perform the audio control methods in the foregoing embodiments.

The electronic device, the computer storage medium, the computer program product, or the chip system provided in embodiments is configured to perform the corresponding methods provided above. Therefore, for beneficial effects that can be achieved, refer to the beneficial effects of the corresponding methods provided above. Details are not described herein again.

The foregoing descriptions about implementations allow a person skilled in the art to clearly understand that, for the purpose of convenient and brief description, division of the foregoing functional modules is taken as an example for illustration. During actual application, the foregoing functions may be allocated to different functional modules for implementation based on a requirement, in other words, an inner structure of an apparatus is divided into different functional modules to implement all or some of the functions described above.

In the several embodiments provided in this application, it should be understood that the disclosed apparatus and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate. A component displayed as a unit may be one or more physical units, that is, may be located in one place, or may be distributed in a plurality of different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application.

## Claims

1. An audio control method, applied to a first electronic device, wherein a first audio application is installed on the first electronic device, the first electronic device comprises a first focus stack, the first focus stack is used to store focus information corresponding to an audio application that plays an audio via the first electronic device, and the method comprises:
creating a second focus stack, wherein the second focus stack is used to store focus information corresponding to an audio application that plays an audio via a second electronic device; and
responding to a first instruction, placing first focus information of the first audio application on the top of the second focus stack, and notifying that the first audio application obtains an audio focus, to play an audio of the first audio application via the second electronic device when content of the first audio application is hopped to the second electronic device.

2. The audio control method according to claim 1, wherein a second audio application is installed on the second electronic device, and the method further comprises:
obtaining first information, wherein the first information indicates to play an audio of the second audio application via the second electronic device; and
in response to obtaining the first information, obtaining second focus information of the second audio application, placing the second focus information on the top of the second focus stack, and notifying that the first audio application loses the audio focus.

3. The audio control method according to claim 2, wherein the method further comprises:
obtaining second information, wherein the second information indicates that the second audio application loses the audio focus; and
in response to obtaining the second information, placing the first focus information on the top of the second focus stack, and notifying that the first audio application obtains the audio focus.

4. The audio control method according to any one of claims 1 to 3, wherein the responding to a first instruction, and placing first focus information of the first audio application on the top of the second focus stack comprises:
obtaining a first operation;
in response to the first operation, determining, from the first focus stack and the second focus stack, the first focus stack corresponding to the first operation, and placing the first focus information of the first audio application on the top of the first focus stack, to play the audio of the first audio application via the first electronic device;
obtaining a second operation, wherein the second operation indicates to hop, to the second electronic device, the first audio application that is playing the audio; and
in response to the first instruction corresponding to the second operation, determining, from the first focus stack and the second focus stack, the second focus stack corresponding to the first instruction, and moving the first focus information of the first audio application from the first focus stack to the top of the second focus stack.

5. The audio control method according to any one of claims 1 to 3, wherein before the responding to a first instruction, the method further comprises:
hopping the first audio application to the second electronic device in response to a third operation; and
obtaining the first instruction when detecting that the first audio application hopped to the second electronic device applies for audio playing.

6. The audio control method according to any one of claims 1 to 5, wherein the method further comprises:
obtaining a second instruction, wherein the second instruction indicates to migrate the first audio application back to the first electronic device; and
in response to the second instruction, moving the first focus information from the second focus stack to the top of the first focus stack, and notifying that the first audio application obtains the audio focus.

7. The audio control method according to any one of claims 1 to 6, wherein the creating a second focus stack comprises:
obtaining a device identifier of the second electronic device; and
creating the second focus stack based on the device identifier.

8. The audio control method according to claim 7, wherein when N device identifiers are obtained, and N is an integer greater than or equal to 2, the creating the second focus stack based on the device identifier comprises:
respectively creating N second focus stacks based on the N device identifiers.

9. An audio control method, applied to a first electronic device and a second electronic device, wherein the first electronic device is communicatively connected to the second electronic device, a first audio application is installed on the first electronic device, the second electronic device comprises a first local focus stack, the first local focus stack is used to store focus information of an audio application that plays an audio via the second electronic device, and the method comprises:
obtaining, by the first electronic device, a first instruction;
notifying, by the first electronic device in response to the first instruction, that the first audio application obtains an audio focus, and transmitting first focus information of the first audio application to the second electronic device; and
creating, by the second electronic device, first analog focus information based on the first focus information, and placing the first analog focus information on the top of the first local focus stack, to play an audio of the first audio application via the second electronic device when content of the first audio application is hopped to the second electronic device.

10. The audio control method according to claim 9, wherein the second electronic device comprises a second audio application, and the method further comprises:
obtaining, by the second electronic device, a fourth operation, wherein the fourth operation indicates to play an audio of the second audio application via the second electronic device;
in response to the fourth operation, placing, by the second electronic device, second focus information of the second audio application on the top of the first local focus stack, and notifying that the second audio application obtains the audio focus; and
in response to the second audio application obtaining the audio focus, notifying, by the first electronic device, that the first audio application loses the audio focus.

11. The audio control method according to claim 9 or 10, wherein the first electronic device comprises a second local focus stack, and the method further comprises:
obtaining, by the first electronic device, the first analog focus information from the second electronic device in response to a migrate-back instruction; and
placing, by the first electronic device, the first analog focus information on the top of the second local focus stack, and notifying that the first audio application obtains the audio focus, to play the audio of the first audio application via the first electronic device.

12. A computer storage medium, comprising computer instructions, wherein when the computer instructions are run on an electronic device, the electronic device is enabled to perform the audio control method according to any one of claims 1 to 8.

13. A computer program product, wherein when the computer program product runs on a computer, the computer is enabled to perform the audio control method according to any one of claims 1 to 8.

14. An electronic device, wherein the electronic device comprises a processor and a memory, the memory is configured to store instructions, and the processor is configured to call the instructions in the memory, for the electronic device to perform the audio control method according to any one of claims 1 to 8.
